(19) Europäisches Patentamt
European Patent Office
Office européen des brevets

(11) **EP 4 635 305 A1**

(12) **EUROPEAN PATENT APPLICATION**

(43) Date of publication:
**22.10.2025 Bulletin 2025/43**

(21) Application number: **24171386.6**

(22) Date of filing: **19.04.2024**

(51) International Patent Classification (IPC):
***A24B 13/00*** (2006.01)     ***A23P 30/20*** (2016.01)
***A24B 3/14*** (2006.01)

(52) Cooperative Patent Classification (CPC):
**A24B 13/00; A23G 3/00; A23G 4/00; A23L 29/256;
A23L 29/262; A23P 30/20; A24B 3/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nicoventures Trading Limited
London WC2R 3LA (GB)**

(72) Inventors:
• **Aoun, Walid Abi
Southampton (GB)**
• **Martin, Stuart
Southampton (GB)**
• **Aliu, Fiona
Southampton (GB)**

(74) Representative: **Newcombe, Christopher David et al
Venner Shipley LLP
200 Aldersgate
London EC1A 4HD (GB)**

(54) **AN ORAL COMPOSITION**

(57)     The invention provides an oral composition comprising a filler material in the form of non-linear strands, wherein the filler material comprises an active and/or a flavourant and a crosslinked binder. The invention also provides oral pouched products comprising the oral composition, the use of a filler material in an oral product, and methods of producing the filler material.

**EP 4 635 305 A1**

## Description

### Technical Field

The present invention relates to oral compositions, pouched products comprising oral compositions, and methods of producing oral compositions.

### Background

There exist many different compositions which are adapted for oral use and interest in oral compositions, and in particular pouched oral products, has been increasing for several years. Oral compositions may comprise actives such as nicotine, cannabinoids, and other active ingredients. Typical oral products include snus, snuff, chewing tobacco, and more recently nicotine pouched products which do not contain tobacco plant material.

Oral compositions typically contain a filler component, in addition to any active present, acting as a carrier or serving alternative functions, such as improving the mouthfeel of an oral composition.

### Summary

According to a first aspect, there is described an oral composition comprising a filler material in the form of one or more non-linear strands, wherein the filler material comprises an active and/or flavourant and a crosslinked binder.

According to a second aspect, there is described at pouched product comprising the oral composition according to the first aspect.

According to a third aspect, there is described a method or making the filler material forming part of the first aspect.

According to a fourth aspect, there is described the use of a filler material in the form of one or more non-linear strand in an oral product, wherein the filler material comprises an active and/or a flavourant and a crosslinked binder.

### Brief Description of Figures

Figure 1 illustrates a schematic diagram of the filler material disclosed herein.
Figure 2 illustrates a schematic cross-section of the filler material of Figure 1.
Figure 3 illustrates a schematic diagram of the filler material discloses herein.
Figure 4 is a photograph of filler material as discussed herein (left) and an equivalent filler material in the form of a shredded sheet (right).

### Detailed Description

The filler material is in the form of non-linear strands, which may alternatively be described as non-linear gel fibres. That is, the filler material is in the form of strands or gel fibres, wherein each strand or fibre is non-linear across its length. The strands or fibres may alternatively be described as being curly, noodle-like or kinked. Each strand may therefore be thought of as being similar in shape to a noodle, whilst a number of the strands or gel fibres together can be thought of as being similar in shape to a collection of multiple noodles, where the individual strands may overlap and interlink randomly with each other. As used herein, the term "non-linear strands" is also intended to encompass the alternative terms described herein, such as "non-linear gel fibres", "curly strands", "curly gel fibres", "noodle-like strands", "noodle-like gel fibres", "kinked strands", etc.

Each non-linear strand may have a diameter from about 0.05 mm, 0.1 mm, 0.2 mm or 0.3 mm to about 3 mm, 2.5 mm, 2 mm, 1.5 mm, 1.1 mm, 0.8 mm, 0.6 mm or 0.5 mm. In some embodiments, each non-linear strand has a diameter of from about 0.05 mm to about 3 mm, from about 0.1 to about 2 mm, from about 0.2 to about 1.1 mm, or from about 0.3 to about 0.6 mm, or from about 0.2 to about 0.4 mm. In some embodiments, each non-linear strand has a diameter of from about 0.3 to about 2.5 mm, from about 0.5 to about 1.5 mm, or from about 0.7 to about 1.1 mm. The diameter, also referred to as the width, is defined as the longest dimension of the cross-section of the strand.

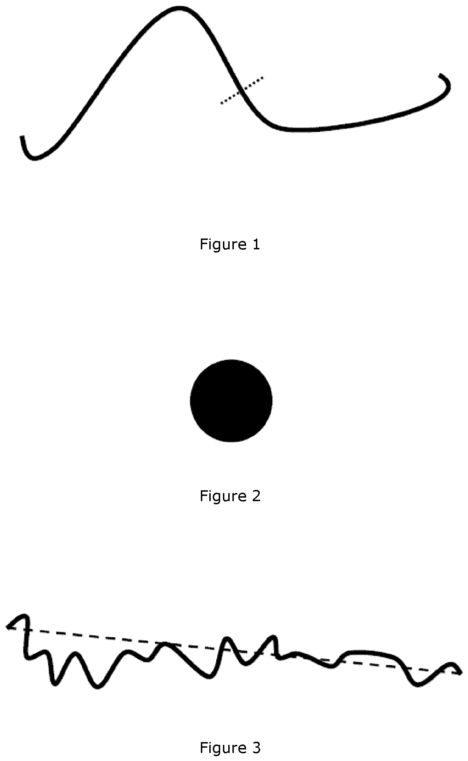

Each non-linear strand may have a circular or substantially circular cross-section. The cross-section is the shape exposed by making a straight cut through the strand at right angles to the length at that point. An example of a circular cross-section of a strand is shown in Figure 2, with the cross-section being taken at the dotted line on the schematic representation of the strand of the invention as shown in Figure 1.

However, as will be described below, the shape of the strands are determined by the way in which they are made,

EP 4 635 305 A1

and therefore the skilled person would recognise that strands having other cross-sectional shapes (e.g. rectangular, substantially rectangular, triangular or substantially triangular) could also be made.

In some embodiments, the non-linear strands of the invention are homogenous through the cross-section. That is, in some embodiments the composition of the strands is homogeneous.

Each non-linear strand may have a thickness of from about 0.05 mm, 0.1 mm, 0.2 mm or 0.3 mm to about 3 mm, 2.5 mm, 2 mm, 1.5 mm, 1.1 mm, 0.8 mm, 0.6 mm or 0.5 mm. In some embodiments, each non-linear strand has a thickness of from about 0.05 mm to about 3 mm, from about 0.1 to about 2 mm, from about 0.2 to about 1.1 mm, or from about 0.3 to about 0.6 mm, or from about 0.2 to about 0.4 mm. In some embodiments, each non-linear strand has a diameter of from about 0.3 to about 2.5 mm, from about 0.5 to about 1.5 mm, or from about 0.7 to about 1.1 mm. As used herein, the term "thickness" is the dimension of the cross-section which is perpendicular to the diameter or width.

When the cross-section of the non-linear strand is a circle, the ratio of the diameter to the thickness of the non-linear strand will be 1. Each non-linear strand may have a diameter to thickness ratio of from about 1:2 to about 2:1, such as from about 3:2 to about 2:3, such as about 1:1.

Each non-linear strand may have an overall length (also referred to herein as the total length) of from about 8 mm, 10 mm, 15 mm, 20 mm or 30 mm to about 200 mm, 100 mm, 75 mm or 50 mm. The overall or total length of each strand is also referred to herein as the uncoiled length and is defined as the theoretical length if the strand was extended to be straight. For example, the overall length of the strand shown in Figure 3 is the total length of the strand, i.e. the length of the solid black line if this was straightened out.

In some embodiments, each non-linear strand has an overall length of from about 10 mm to about 200 mm, such as from about 20 mm to about 100 mm, or from about 30 mm to about 50 mm.

Each non-linear strand may have a free-length of from about 3 mm, 5 mm, 8 mm or 11 mm to about 25 mm, 22 mm, 20 mm or 18mm. The term "free length" as used herein is intended to mean the shortest (linear) length between the furthest ends of the strand in its natural non-linear (or curly) state (e.g. the distance between the ends of the strand "as the crow flies"). This is also referred to herein as the coiled length. For example, in Figure 3 the free-length or coiled length of the strand is shown by the dashed line. Non-linear strands with a free-length outside of the ranges disclosed herein may clump together more readily than non-linear strands having a free-length as defined herein.

In some embodiments, each non-linear strand has a free or coiled length of from about 2 mm to about 35 mm, such as from about 3 mm to about 25 mm, from about 6 to about 23 mm, from about 8 mm to about 22 mm, or from about 11 mm to about 20 mm.

The total or uncoiled length is greater than the free or coiled length. In some embodiments, the ratio between the total length and the free length of each non-linear strand (i.e. the total length divided by the free length) is at least about 1.2, such as at least about 1.3, at least about 1.5 or at least about 2. In some embodiments, the ratio between the total length and the free length of each non-linear strand is less than about 10, less than about 8 or less than about 6. In some embodiments, the ratio between the total length and the free length of each non-linear strand is from about 1.2 to about 10, such as from about 1.5 to about 5, or from about 2 to about 5.

In some embodiments, the aspect ratio of the non-linear strands (i.e. the total length divided by the diameter) ranges from about 5 to about 200, such as from about 10 to about 100 or about 20 to about 50.

In some embodiments, the tensile strength of each strand ranges from about 0.1 N, 0.2 N, 0.3 N or 0.4 N to about 3.0 N, 2.0 N, 1.5 N or 1.0 N. In some embodiments, the tensile strength of each strand ranges from about 0.1 N to about 3.0 N, from about 0.2 N to about 2.0 N, or from about 0.3 N to about 1.0 N.

The tensile strength of the non-linear strands of the present invention may be determined by measuring the tensile force needed to break the strand. A suitable test procedure is set out in ISO 527-3:1995. As used herein, the tensile strength is essentially the force needed to break the strand and is given as a force (in Newtons) per strand. The force needed to break the strand may be determined using an appropriate machine, for example a tensile testing machine from Instron, model 68TM-5. Before measuring the tensile strength, the samples should be conditioned at 22°C $\pm$ 1°C and a relative humidity (RH) of (60 $\pm$ 2) % for at least 48 hours. The atmospheric pressure should be within the range 96 kPa $\pm$ 10 kPa.

In some embodiments, the uncoiled length, coiled length, aspect ratio and/or tensile strength values of each strand may be calculated as averages of measurements taken for multiple strands. For example, the values may be calculated as averages of measurements taken for from about 5 to about 100 strands, such as from about 20 to about 70 strands, such as 50 strands.

In some embodiments, the filler material has a fill value of at least about 2 $cm^3/g$, 2.5 $cm^3/g$, 3 $cm^3/g$, 3.5 $cm^3/g$, 4 $cm^3/g$, 4.5 $cm^3/g$, or 5 $cm^3/g$. In some embodiments the fill value is less than about 6 $cm^3/g$, 6.5 $cm^3/g$, 7 $cm^3/g$, 7.5 $cm^3/g$, 8 $cm^3/g$, 8.5 $cm^3/g$, 9 $cm^3/g$, 9.5 $cm^3/g$ or 10 $cm^3/g$. In some embodiments, the filler material has a fill value from about 2 $cm^3/g$ to about 7.5 $cm^3/g$, from about 3 $cm^3/g$ to about 7 $cm^3/g$, from about 3.5 $cm^3/g$ to about 6 $cm^3/g$ or from about 4 $cm^3/g$ to about 6 $cm^3/g$. In other embodiments, the filler material has a fill value of from about 3 $cm^3/g$ to about 10 $cm^3/g$, from about 4 $cm^3/g$ to about 9.5 $cm^3/g$, from about 4.5 $cm^3/g$ to about 9 $cm^3/g$ or from about 5 $cm^3/g$ to about 9 $cm^3/g$.

The fill value is measured by placing a known weight of material within a cylinder of known dimensions. It is

3

subjected to pressure from a weighted piston for 30 seconds. The residual height of the compressed sample is measured and converted to volume. The fill value is then calculated as the volume of material over the mass.

In more detail, the fill value of the non-linear strands of the present invention may be determined by the following procedure: a 20 g sample of the material is deposited into a 60 mm diameter cylinder of a densimeter and then the material is compressed with a 2.90 ± 0.03 kg piston for 30 seconds. The height of the piston in the densimeter is measured. The fill values of the samples are calculated according to the following formulae.

The volume occupied by the material when compressed is determined using Formula 1:

$$Volume\ (cm^3) = \pi\ x\ r^2 x\ \frac{h}{10}$$

*Formula 1*

r = radius of cylinder (cm)
h = measured height (mm)

The fill value is then determined using the measured volume and mass of material according to Formula 2:

$$Fill\ value\ [cm^3/g] = \frac{Volume\ [cm^3]}{Mass\ [g]}$$

*Formula 2*

The fill value can also be given in units of $cm^3/10g$, with 1 $cm^3/g$ being equal to 10 $cm^3/10g$.

It was found that the filler material of the present invention has a higher fill value than materials comprising the same components but which are formed as flat sheets (e.g. by casting), rolled sheets (e.g. by rolling flat sheets), or shredded sheets (e.g. by shredding flat sheets). The present filler material also has a higher fill value than materials typically used in oral compositions, such as powdered MCC. Filling value (also referred to herein as fill value) is a measure of the volume occupied by a given mass of material when a given pressure is applied. That is, the fill value is a measure of the ability of a material to occupy a specific volume.

By using a higher fill value material as a filler material, it may be possible to provide consumables, i.e. oral compositions, having a lower overall weight than conventional compositions. Reducing the overall weight can provide numerous advantages, such as reduced transportation costs as well as reduced material costs and/or taxes. Furthermore, reducing the weight of oral compositions may also have a positive impact on the environment because less energy may be required for transportation. In addition, consumers may prefer to carry and use a lighter-weight product.

The materials of the present invention have a higher fill value than conventional filler materials because the packing efficiency of the material in the form of non-linear strands is lower than conventional materials, which may be in the form of flat sheets, rolled sheets or shredded sheets, or powdered MCC. That is, if a container having a given volume were filled with the filler material of the invention, the percentage of the container which is occupied by material would be lower than for a conventional material. Put another way, there would be a higher volume of voids or empty space in the container, such as a pouch, containing the material of the invention. Thus, less filler material would be needed to fill the container. Increasing the volume of void space, or empty space, within an oral composition, such as a pouched product may result in more rapid release of releasable components from within the pouch. For example, an oral composition comprising the filler material as described herein, may release an active and/or a flavourant more rapidly compared to a pouched product comprising conventional filler materials, such as MCC powder.

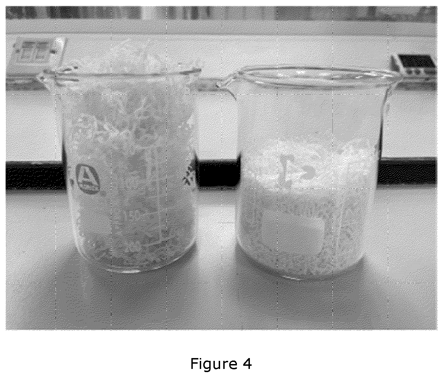

Figure 4 shows an image of the same weight of a filler material in the form of non-linear strands as discussed herein (left) compared to a similar material which is formed as a flat sheet and then shredded (right).

In some embodiments, the maximum elongation at break of each strand is at least about 1.5%, at least about 2%, at least about 3.5%, at least about 5%, at least about 7.5%, or at least about 10%. In some embodiments, the elongation at break of each strand is less than about 50%, less than about 35%, less than about 30% or less than about 25%.

In some embodiments, the elongation at break of each strand ranges from about 1.5% to about 50%, from about 2% to about 35%, or from about 5% to about 25%.

The elongation at break of the non-linear strands of the present invention may be determined by any suitable test. For example, a strand may be clamped into a measuring device (such as an Instron model 68TM-5 or equivalent) with a clamping length of 180 mm +/- 0.5 mm, and then pulled apart at a constant speed of 20 mm/min. The length of the strand at the start and the length of the strand at the point of break are measured.

Elongation at break measures how much bending and shaping a material can withstand without breaking, and can be determined as follows in formula 3:

$$Elongation\ at\ break\ (\%) = 100\ x\ \frac{\Delta L}{L_0}$$

*Formula 3*

where $\Delta L$ is the length change at the moment of sample rupture (i.e. the length of the strand at the point of break minus the length of the strand at the start), and L0 is the strand length at the start of the test.

The flexibility of the non-linear strands may be characterised by a combination of both good tensile strength and good elongation. A higher flexibility of the non-linear strands is desired to reduce the possibility of the non-linear strands breaking during processing. Non-linear strands with higher flexibility are also less likely to inadvertently pierce the wrapper of a consumable.

The filler material may comprise an amount of about 1wt%, 5wt%, 6wt%, 7wt%, 10wt%, or 15wt% to about 25wt%, 30wt%, 40wt%, 50wt% or 60wt% of crosslinked binder (all calculated on a dry weight basis). For example, the filler material may comprise an amount of 1-60wt%, 5-50wt%, 6-40wt%, 7-30wt% or 15-25wt% of binder (dry weight basis). These amounts represent the total amount of binder(s) in the filler material.

The crosslinked binder may comprise or consist of a non-cellulosic binder. Examples of non-cellulosic binders which may be used include, but are not limited to, alginates, pectins, carrageenans (e.g. iota-carrageenan), gellan gums (e.g. high acyl gellan gum) and combinations thereof.

In some embodiments, the binder comprises alginate and/or pectin and/or iota-carrageenan.

In some embodiments, the binder comprises alginate and/or iota-carrageenan.

In some embodiments, the binder comprises, consists essentially of, or consists of alginate and iota-carrageenan.

In some embodiments, the binder does not comprise alginate.

In some embodiments, the binder comprises, consists essentially of, or consists of iota-carrageenan.

The filler material may be substantially free of cellulosic binder. "Substantially free" means that material comprises less than 1wt%, such as less than 0.5wt% of the relevant component (dry weight basis). In some embodiments, the material does not comprise a cellulosic binder.

The filler material may be substantially free of carboxymethylcellulose (CMC). In some embodiments, the material does not comprise CMC.

In some embodiments, the binder comprises alginate, and the alginate is present in the filler material in an amount of 1-30wt%, 2-20wt%, 3-20wt%, or 5-15wt% of the filler material (calculated on a dry weight basis). In some embodiments, the binder comprises alginate and at least one further non-cellulosic binder, such as iota-carrageenan.

In some embodiments, the filler material comprises multiple binders. In some embodiments, the filler material comprises a crosslinked binder and a non-crosslinked binder. If present, the non-crosslinked binder may be a cellulosic binder. Examples of cellulosic binders which may be used include, but are not limited to, hydroxymethyl cellulose, hydroxyethyl cellulose, hydroxypropyl cellulose, carboxymethylcellulose (CMC), hydroxypropyl methylcellulose (HPMC), methyl cellulose, ethyl cellulose, cellulose acetate (CA), cellulose acetate butyrate (CAB), and cellulose acetate propionate (CAP). In some embodiments, the cellulosic binder is selected from hydroxyethyl cellulose, hydroxypropyl cellulose, and/or carboxymethylcellulose. In some embodiments, the cellulosic binder comprises carboxymethylcellulose (CMC). In some embodiments, the cellulosic binder is carboxymethylcellulose (CMC).

In some embodiments a filler material is provided in the form of one or more non-linear strands, wherein the filler material comprises an active and a binder selected from the group consisting of alginate, pectin, carrageenan, (such as iota-carrageenan), gellan gum (such as high acyl gellan gum), and combinations thereof. In this material the total amount of binder may be the same as the amounts described above in relation to the crosslinked binder. For example, the filler material of this embodiment may comprise an amount of 1-60 wt%, 5-50 wt%, 6-40wt%, 7-20wt% or 15-25 wt% of binder (dry weight basis).

In some embodiments, the binder comprises iota-carrageenan, and the iota-carrageenan is present in the filler material in an amount of 1-30wt%, 2-20wt%, 5 20wt%, or 10-20wt% of the filler material (calculated on a dry weight basis).

In some embodiments, the filler material comprises 5-15wt% alginate and 10-20wt% iota-carrageenan (calculated on a dry weight basis).

In some embodiments, the filler material comprises a crosslinking agent. In some cases, the crosslinking agent comprises calcium ions. In some embodiments, the crosslinking agent comprises calcium lactate, calcium formate, and/or calcium acetate. In some embodiments, the crosslinking agent comprises calcium lactate. In some cases, the filler material comprises a calcium-crosslinked alginate. The crosslinking agent may also be described as a setting agent.

The filler material may comprise about 0.5wt%, 1wt%, 3wt% or 5wt% to about 10wt%, 9wt%, 8 wt% or 7wt% of crosslinking agent (all calculated on a dry weight basis). For example, the filler material may comprise 1-10 wt%, 3-8 wt% or 5-7 wt% of crosslinking agent (dry weight basis). These amounts represent the total amount of crosslinking agent(s) in the material.

The filler material may comprise about 1wt%, 10wt% or 20wt% to about 80wt%, 60wt% or 50wt% of flavour (all calculated on a dry weight basis). For example, the material may comprise 1-80wt%, 10-60wt%, or 20-50wt% of flavour. These amounts represent the total amount of flavour(s) in the filler material, if a flavour is present.

As used herein, the terms "flavour" and "flavourant" refer to materials which, where local regulations permit, may be used to create a desired taste, aroma, or other somatosensorial sensation in a product for adult consumers. They may include naturally occurring flavour materials, botanicals, extracts of botanicals, synthetically obtained materials, or combinations thereof (e.g., tobacco, cannabis, licorice (liquorice), hydrangea, eugenol, Japanese white bark magnolia leaf, chamomile, fenugreek, clove, maple, matcha, menthol, Japanese mint, aniseed (anise), cinnamon, turmeric, Indian spices, Asian spices, herb, wintergreen, cherry, berry, red berry, cranberry, peach, apple, orange, mango, clementine, lemon, lime, tropical fruit, papaya, rhubarb, grape, durian, dragon fruit, cucumber, blueberry, mulberry, citrus fruits, Drambuie, bourbon, scotch, whiskey, gin, tequila, rum, spearmint, peppermint, lavender, aloe vera, cardamom, celery, cascarilla, nutmeg, sandalwood, bergamot, geranium, khat, naswar, betel, shisha, pine, honey essence, rose oil, vanilla, lemon oil, orange oil, orange blossom, cherry blossom, cassia, caraway, cognac, jasmine, ylang-ylang, sage, fennel, wasabi, piment, ginger, coriander, coffee, hemp, a mint oil from any species of the genus Mentha, eucalyptus, star anise, cocoa, lemongrass, rooibos, flax, ginkgo biloba, hazel, hibiscus, laurel, mate, orange skin, rose, tea such as green tea or black tea, thyme, juniper, elderflower, basil, bay leaves, cumin, oregano, paprika, rosemary, saffron, lemon peel, mint, beefsteak plant, curcuma, cilantro, myrtle, cassis, valerian, pimento, mace, damien, marjoram, olive, lemon balm, lemon basil, chive, carvi, verbena, tarragon, limonene, thymol, camphene), flavour enhancers, bitterness receptor site blockers, sensorial receptor site activators or stimulators, sugars and/or sugar substitutes (e.g., sucralose, acesulfame potassium, aspartame, saccharine, cyclamates, lactose, sucrose, glucose, fructose, sorbitol, or mannitol), and other additives such as charcoal, chlorophyll, minerals, botanicals, or breath freshening agents. They may be imitation, synthetic or natural ingredients or blends thereof. They may be in any suitable form, for example, liquid such as an oil, solid such as a powder, or gas.

In some embodiments, the flavour comprises menthol, spearmint and/or peppermint. In some embodiments, the flavour comprises, consists essentially of or consists of menthol.

In some embodiments the flavourant is a water-soluble flavourant.

The flavourant may be incorporated during the formation of the filler material (e.g. when forming a slurry comprising the materials that form the material) or it may be applied to the filler material after its formation (e.g. by spraying it onto the material after drying).

In some embodiments, the filler material comprises from about 1wt%, 10wt%, 20wt%, 30wt% or 40wt% to about 80 wt%, 70 wt%, 70wt%, 65wt%, or 60wt%, of a bulking agent (all calculated on a dry weight basis). In other embodiments, the filler material may comprise 10-80wt%, 20-70wt%, 30-65wt% or 40-65wt% of bulking agent (all calculated on a dry weight basis). For example, the filler material may comprise 1-70wt%, 10-65wt%, 20-60wt%, 30-60wt%, or 40-60wt% of bulking agent (all calculated on a dry weight basis). These amounts represent the total amount of bulking agent(s) in the filler material.

In some embodiments, the filler material comprises less than 70 wt.% bulking agent, such as less than 60 wt.% bulking agent, less than 50 wt.%, less than 30 wt.%, less than 20 wt.% or less than 10 wt.%.

The bulking agent may comprise one or more inorganic materials, such as calcium carbonate, perlite, vermiculite, diatomaceous earth, colloidal silica, magnesium oxide, magnesium sulphate, magnesium carbonate, and suitable inorganic sorbents, such as molecular sieves. The bulking agent may comprise one or more organic materials such as wood pulp, cellulose and cellulose derivatives (e.g. ground cellulose). In particular cases, the filler material comprises less than 10wt%, less than 5 wt%, less than 1 wt% or no calcium carbonate such as chalk. It may be desirable to avoid including high amounts of calcium carbonate (e.g. more than 10 wt%, more than 25 wt% or more than 50 wt%) in the material because calcium carbonate has a high density. As such, including high amounts of calcium carbonate can cause the material to become dense and/or have a low fill value.

In some embodiments, the bulking agent is fibrous. For example, the bulking agent may be a fibrous organic filler material such as wood pulp, hemp fibre, cellulose or cellulose derivatives, such as microcrystalline cellulose (MCC), nanocrystalline cellulose and/or ground cellulose. Without wishing to be bound by theory, it is believed that including fibrous components in a material may increase the tensile strength of the material.

In some embodiments, the bulking agent comprises wood pulp, MCC and/or ground cellulose.

In some embodiments, the bulking agent comprises MCC and ground cellulose.

In some embodiments, the bulking agent comprises (or is) wood pulp.

In some embodiments, the bulking agent comprises maltodextrin or microcrystalline cellulose (MCC). As would be well understood by the skilled person, microcrystalline cellulose may be formed by depolymerising cellulose by a chemical process (e.g. using an acid or enzyme). One example method for forming microcrystalline cellulose involves acid hydrolysis of cellulose, using an acid such as HCl. The cellulose produced after this treatment is crystalline (i.e. no amorphous regions remain). Suitable methods and conditions for forming microcrystalline cellulose are well-known in the art.

The filler material may have any suitable water content, such as from 1wt % to 15wt%. Suitably, the water content of the material may be from about 5wt%, 7wt% or 9wt% to about 15wt%, 13wt%, 11wt%, 9wt% or 8wt% (wet weight basis) (WWB). In some embodiments, the material has a water content of less than about 9 wt% (WWB), such as less than about 8 wt% (WWB). The water content of the material may, for example, be determined by Karl-Fischer-titration or Gas Chromatography with Thermal Conductivity Detector (GC-TCD).

In some embodiments, the filler material may be formed using a mould. When the filler material is formed using a mould, all strands may be identical or substantially identical. In this case properties of the strands such as the uncoiled length, coiled length, aspect ratio and/or tensile strength values may be the same or substantially the same between strands. It may therefore not be necessary to calculate these values as averages, although this can still be done. In some embodiments the uncoiled length, coiled length, aspect ratio and/or tensile strength values may therefore be measured for a single strand. This single strand may then be taken to be representative of all the strands.

The filler material may comprise a colourant. The addition of a colourant may alter the visual appearance of the material. The presence of colourant in the material may enhance the visual appearance of the material and the oral composition.

A variety of colourants may be used depending on the desired colour of the filler material. The colour of material may be, for example, white, green, red, purple, blue, brown or black. Other colours are also envisaged. Natural or synthetic colourants, such as natural or synthetic dyes, food-grade colourants and pharmaceutical-grade colourants may be used. In certain embodiments, the colourant is caramel, which may confer the material with a brown appearance.

The colourant may be incorporated during the formation of the filler material (e.g. when forming a slurry comprising the materials that form the material) or it may be applied to the material after its formation (e.g. by spraying it onto the material).

In some cases, the filler material may comprise a botanical extract. The material may comprise about 1wt%, 3wt%, 5wt%, 10wt%, 15wt%, 20wt %, 30wt%, 35wt% or 40wt% to about to 30wt%, 35wt%, 40wt%, 50wt%, 60wt%, 65wt % or 70wt% of botanical extract (all calculated on a dry weight basis). In exemplary embodiments, the material comprises 1-70wt%, 5-60wt%, or 10-50wt% of botanical extract (all calculated on a dry weight basis). In other embodiments, the material may comprise 10-40wt%, 10-35wt%, 15-30wt% of botanical extract (all calculated on a dry weight basis). In other embodiments, the material may comprise 10-70wt%, 20-65wt%, 40-60wt% of botanical extract (all calculated on a dry weight basis). These amounts represent the total amount of botanical extract(s) in the material.

The botanical extract may comprise or consist of a botanical extract which naturally contains metal (e.g. calcium or magnesium) ions (i.e. the ions are present without being added). In some embodiments, the botanical extract naturally contains calcium ions. The botanical extract may also be described as a plant extract.

As used herein, the term "botanical extract" includes an extract of any material derived from plants including, but not limited to, extracts, leaves, bark, fibres, stems, roots, seeds, flowers, fruits, pollen, husk, shells or the like. Alternatively, the botanical extract may comprise an active compound naturally existing in a botanical, obtained synthetically. Example botanicals are tobacco, eucalyptus, star anise, hemp, cocoa, cannabis, fennel, lemongrass, peppermint, spearmint, rooibos, chamomile, flax, ginger, ginkgo biloba, hazel, hibiscus, laurel, liquorice, matcha, mate, orange skin, papaya, rose, sage, tea such as green tea or black tea, thyme, clove, cinnamon, coffee, aniseed (anise), basil, bay leaves, cardamom, coriander, cumin, nutmeg, oregano, paprika, rosemary, saffron, lavender, lemon peel, mint, juniper, elderflower, vanilla, wintergreen, beefsteak plant, curcuma, turmeric, sandalwood, cilantro, bergamot, orange blossom, myrtle, cassis, valerian, pimento, mace, damien, marjoram, olive, lemon balm, lemon basil, chive, carvi, verbena, tarragon, geranium, mulberry, ginseng, theanine, theacrine, maca, ashwagandha, damiana, guarana, chlorophyll, baobab or any combination thereof. The mint may be chosen from the following mint varieties: Mentha Arventis, Mentha c.v.,Mentha niliaca, Mentha piperita, Mentha piperita citrata c.v.,Mentha piperita c.v, Mentha spicata crispa, Mentha cardifolia, Memtha longifolia, Mentha suaveolens variegata, Mentha pulegium, Mentha spicata c.v. and Mentha suaveolens.

In some embodiments, the filler material comprises a particulate botanical material. The material may comprise about 1 wt%, 3 wt%, 5 wt%, 10 wt%, 15 wt%, 20 wt %, 30 wt%, 35 wt% or 40 wt% to about to 30 wt%, 35 wt%, 40 wt%, 50 wt%, 60 wt%, 65 wt % or 70 wt% of particulate botanical material (all calculated on a dry weight basis). In exemplary embodiments, the material comprises 1-70 wt%, 5-60 wt%, 10-50 wt%, or 30-40 wt% of particulate botanical material (all calculated on a dry weight basis).

In some embodiments, the filler material comprises an additional active other than a botanical extract.

In some embodiments, the active comprises a nicotinic compound. As used herein, "nicotinic compound" or "source of nicotine" often refers to naturally-occurring or synthetic nicotinic compound unbound from a plant material, meaning the compound is at least partially purified and not contained within a plant structure, such as a tobacco leaf. In some embodiments, nicotine is naturally-occurring and obtained as an extract from a Nicotiana species (e.g., tobacco).

The nicotine can have the enantiomeric form S(-)-nicotine, R(+)-nicotine, or a mixture of S(-)-nicotine and R(+)-nicotine. In some embodiments, the nicotine is in the form of S(-)-nicotine (e.g., in a form that is virtually all S(-)-nicotine) or a racemic mixture composed primarily or predominantly of S(-)-nicotine (e.g., a mixture composed of about 95 weight parts S(-)-nicotine and about 5 weight parts R(+)-nicotine). The nicotine can be employed in virtually pure form or in an essentially pure form. The nicotine that is employed can have a purity of greater than about 95 percent, greater than about 98 percent, or greater than about 99 percent, on a weight basis.

In some embodiments, a nicotine component may be included in the composition in free base form, salt form, as a complex, or as a solvate. By "nicotine component" is meant any suitable form of nicotine (e.g., free base or salt) for providing oral absorption of at least a portion of the nicotine present. Typically, the nicotine component is selected from the group consisting of nicotine free base and a nicotine salt. In some embodiments, nicotine is in its free base form, which easily can be adsorbed in for example, a microcrystalline cellulose material to form a microcrystalline cellulose-nicotine carrier complex.

In some embodiments, at least a portion of the nicotine can be employed in the form of a salt. Typically, the nicotine component is selected from the group consisting of nicotine free base, a nicotine salt such as hydrochloride, dihydrochloride, monotartrate, bitartrate, sulfate, salicylate, and nicotine zinc chloride. In some embodiments, the nicotine component or a portion thereof is a nicotine salt with one or more organic acids, as explained more fully below.

In some embodiments, at least a portion of the nicotine can be in the form of a resin complex of nicotine, where nicotine is bound in an ion-exchange resin, such as nicotine polacrilex, which is nicotine bound to, for example, a polymethacrilic acid, such as Amberlite IRP64, Purolite C115HMR, or Doshion P551. Another example is a nicotine-polyacrylic carbomer complex, such as with Carbopol 974P. In some embodiments, nicotine may be present in the form of a nicotine polyacrylic complex.

In some embodiments, it may be desirable to provide a basic amine-containing oral product configured for oral use which retains the initial basic amine content (e.g., nicotine content) during storage, and which delivers substantially the full amount of basic amine (e.g., nicotine) initially present in the oral product. In some such embodiments, nicotine or other basic amine is employed in association with at least a portion of an organic acid or an alkali metal salt thereof (referred to herein as "ion pairing"). As disclosed herein, at least a portion of the basic amine (e.g., nicotine) is associated with at least a portion of the organic acid or the alkali metal salt thereof. Depending on multiple variables (concentration, pH, nature of the organic acid, and the like), the basic amine present in the composition can exist in multiple forms, including ion paired, in solution (i.e., fully solvated), as the free base, as a cation, as a salt, or any combination thereof. The relative amounts of the various components within the oral product composition may vary, and typically are selected so as to provide the desired sensory and performance characteristics to the oral product. In some embodiments, the association between the basic amine and at least a portion of the organic acid or the alkali metal salt thereof is in the form of an ion pair between the basic amine and a conjugate base of the organic acid.

Ion pairing describes the partial association of oppositely charged ions in relatively concentrated solutions to form distinct chemical species called ion pairs. The strength of the association (i.e., the ion pairing) depends on the electrostatic force of attraction between the positive and negative ions (i.e., a protonated basic amine such as nicotine, and the conjugate base of the organic acid). By "conjugate base" is meant the base resulting from deprotonation of the corresponding acid (e.g., benzoate is the conjugate base of benzoic acid). On average, a certain population of these ion pairs exists at any given time, although the formation and dissociation of ion pairs is continuous. In the oral products as disclosed herein, and/or upon oral use of said oral products (e.g., upon contact with saliva), the basic amine, for example nicotine, and the conjugate base of the organic acid exist at least partially in the form of an ion pair. Without wishing to be bound by theory, it is believed that such ion pairing may minimize chemical degradation of the basic amine and/or enhance the oral availability of the basic amine (e.g., nicotine). At alkaline pH values (e.g., such as from about 7.5 to about 9), certain basic amines, for example nicotine, are largely present in the free base form, which has relatively low water solubility, and low stability with respect to evaporation and oxidative decomposition, but high mucosal availability. Conversely, at acidic pH values (such as from about 6.5 to about 4), certain basic amines, for example nicotine, are largely present in a protonated form, which has relatively high water solubility, and higher stability with respect to evaporation and oxidative decomposition, but low mucosal availability.

It has been found that the properties of stability, solubility, and availability of the nicotine in a composition configured for oral use can be mutually enhanced through ion pairing or salt formation of nicotine with appropriate organic acids and/or their conjugate bases. Specifically, nicotine-organic acid ion pairs of moderate lipophilicity result in favourable stability and absorption properties. Lipophilicity is conveniently measured in terms of logP, the partition coefficient of a molecule between a lipophilic phase and an aqueous phase, usually octanol and water, respectively. An octanolwater partitioning favouring distribution of a basic amine-organic acid ion pair into octanol is predictive of good absorption of the basic amine present in the composition through the oral mucosa.

As noted above, at alkaline pH values (e.g., such as from about 7.5 to about 9), nicotine is largely present in the free base form (and accordingly, a high partitioning into octanol), while at acidic pH values (such as from about 6.5 to about 4), nicotine is largely present in a protonated form (and accordingly, a low partitioning into octanol). An ion pair between certain organic acids (e.g., having a logP value of from about 1.4 to about 8.0. such as from about 1.4 to about 4.5, allows nicotine partitioning into octanol consistent with that predicted for nicotine partitioning into octanol at a pH of 8.4.

One of skill in the art will recognize that the extent of ion pairing in the disclosed composition, both before and during use by the consumer, may vary based on, for example, pH, the nature of the organic acid, the concentration of nicotine, the concentration of the organic acid or conjugate base of the organic acid present in the composition, the water content of the composition, the ionic strength of the composition, and the like. One of skill in the art will also recognize that ion pairing is an equilibrium process influenced by the foregoing variables. Accordingly, quantification of the extent of ion pairing is difficult or impossible by calculation or direct observation. However, as disclosed herein, the presence of ion pairing may be demonstrated through surrogate measures such as partitioning of the nicotine between octanol and water or membrane permeation of aqueous solutions of the basic amine plus organic acids and/or their conjugate bases.

Typically, the nicotine component (calculated as the free base) when present, is in a concentration of at least about 0.001% by weight of the composition, such as in a range from about 0.001% to about 10%. In some embodiments, the nicotine component is present in a concentration from about 0.1% w/w to about 10% by weight, such as, e.g., from about 0.1% w/w, about 0.2%, about 0.3%, about 0.4%, about 0.5% about 0.6%, about 0.7%, about 0.8%, or about 0.9%, to about 1%, about 2%, about 3%, about 4%, about 5%, about 6%, about 7%, about 8%, about 9%, or about 10% by weight, calculated as the free base and based on the total weight of the composition. In some embodiments, the nicotine component is present in a concentration from about 0.1% w/w to about 3% by weight, such as, e.g., from about 0.1% w/w to about 2.5%, from about 0.1% to about 2.0%, from about 0.1% to about 1.5%, or from about 0.1% to about 1% by weight, calculated as the free base and based on the total weight of the composition. These ranges can also apply to other active ingredients noted herein.

In some embodiments, the active substance comprises caffeine, melatonin or vitamin B12.

In some embodiments, the active substance may comprise one or more constituents, derivatives or extracts of cannabis, such as one or more cannabinoids or terpenes.

Cannabinoids are a class of natural or synthetic chemical compounds which act on cannabinoid receptors (i.e., CB1 and CB2) in cells that repress neurotransmitter release in the brain. Cannabinoids may be naturally occurring (phytocannabinoids) from plants such as cannabis, from animals (endocannabinoids), or artificially manufactured (synthetic cannabinoids). Cannabis species express at least 85 different phytocannabinoids, and are divided into subclasses, including cannabigerols, cannabichromenes, cannabidiols, tetrahydrocannabinols, cannabinols and cannabinodiols, and other cannabinoids. Cannabinoids found in cannabis include, without limitation: cannabigerol (CBG), cannabichromene (CBC), cannabidiol (CBD), tetrahydrocannabinol (THC), cannabinol (CBN), cannabinodiol (CBDL), cannabicyclol (CBL), cannabivarin (CBV), tetrahydrocannabivarin (THCV), cannabidivarin (CBDV), cannabichromevarin (CBCV), cannabigerovarin (CBGV), cannabigerol monomethyl ether (CBGM), cannabinerolic acid, cannabidiolic acid (CBDA), Cannabinol propyl variant (CBNV), cannabitriol (CBO), tetrahydrocannabmolic acid (THCA), and tetrahydrocannabivarinic acid (THCV A).

In some embodiments, the active substance may comprise a cannabinoid, such as cannabidiol (CBD).

The filler material and/or the oral composition may comprise an acid. The acid may be an organic acid. In some of these embodiments, the acid may be at least one of a monoprotic acid, a diprotic acid and a triprotic acid. In some such embodiments, the acid may contain at least one carboxyl functional group. In some such embodiments, the acid may be at least one of an alpha-hydroxy acid, carboxylic acid, dicarboxylic acid, tricarboxylic acid and keto acid. In some such embodiments, the acid may be an alpha-keto acid.

In some such embodiments, the acid may be at least one of succinic acid, lactic acid, benzoic acid, citric acid, tartaric acid, fumaric acid, levulinic acid, acetic acid, malic acid, formic acid, sorbic acid, benzoic acid, propanoic and pyruvic acid.

In some embodiments, the acid is lactic acid. In some embodiments, the acid is benzoic acid. In some embodiments, the acid is levulinic acid and/or pyruvic acid.

Inclusion of an acid is particularly preferred in embodiments in which the composition comprises nicotine. The presence of the acid may reduce or substantially prevent evaporation of nicotine during drying of the slurry, thereby reducing loss of nicotine during manufacturing.

In some embodiments, the filler material is substantially free from tobacco. By "substantially free from" it is meant that the material comprises less than 1wt%, such as less than 0.5wt% tobacco (dry weight basis). In some embodiments, the filler material is free from tobacco. In some embodiments, the material does not comprise tobacco fibres. In particular embodiments, the filler material does not comprise fibrous material. In this regard, any tobacco present in the slurry used to form the material may cause the binder to prematurely crosslink, making formation of the non-linear strands of the invention more difficult. Thus, in some embodiments the material substantially free from or free from tobacco.

The filler material may be made from a gel, and this gel may additionally comprise a solvent, included at 0.1-50wt%. However, the inclusion of a solvent in which the flavour is soluble may reduce the gel stability and the flavour may crystallise out of the gel. As such, in some cases, the gel does not include a solvent in which the flavour is soluble.

The oral composition described herein may comprise additional components, in order to improve the overall product.

For example, to improve the organoleptic properties of a composition as disclosed herein, the oral composition may include one or more taste modifying agents ("taste modifiers") which may serve to mask, alter, block, or improve the flavor of a composition as described herein. Non-limiting examples of such taste modifiers include trigeminal sensates, analgesic or anaesthetic herbs, spices, and flavours which produce a perceived cooling (e.g., menthol, eucalyptus, mint), warming (e.g., cinnamon), or painful (e.g., capsaicin) sensation. Certain taste modifiers fall into more than one overlapping category.

In some embodiments, the taste modifier is a cooling agent, such as WS-3 (N-ethyl-5-methyl-2-(1-methylethyl)-cyclohexane carboxamide), WS-23 (N,2,3-trimethyl-2-propan-2-ylbutanamide), WS-5 (N-[(ethoxycarbonyl) methyl)-p-menthane-3-carboxamide), EVERCOOL™ 180 ((1R,2S,5R)-N-(4-(cyanomethyl)phenyl)menthylcarboxamide ), EVERCOOL™ 190 ((1R,2S,5R)-N-(2-(pyridin-2-yl)ethyl)menthylcarboxamide), or combinations thereof.

In some embodiments, the taste modifier modifies one or more of bitter, sweet, salty, or sour tastes. In some embodiments, the taste modifier targets pain receptors. In some embodiments, the composition comprises an active ingredient having a bitter taste, and a taste modifier which masks or blocks the perception of the bitter taste. In some embodiments, the taste modifier is a substance which targets pain receptors (e.g., vanilloid receptors) in the user's mouth to mask e.g., a bitter taste of another component (e.g., an active ingredient). In some embodiments, the taste modifier is capsaicin.

In some embodiments, the taste modifier is the amino acid gamma-amino butyric acid (GABA), referenced herein above with respect to amino acids. Studies in mice suggest that GABA may serve function(s) in taste buds in addition to synaptic inhibition. Without wishing to be bound by theory, GABA may suppress the perception of certain tastes, such as bitterness. In some embodiments, the composition comprises caffeine and GABA.

In some embodiments, the taste modifier is adenosine monophosphate (AMP). AMP is a naturally occurring nucleotide substance which can block bitter food flavours or enhance sweetness. It does not directly alter the bitter flavor, but may alter human perception of "bitter" by blocking the associated receptor.

In some embodiments, the taste modifier is lactisole. Lactisole is an antagonist of sweet taste receptors. Temporarily blocking sweetness receptors may accentuate e.g., savoury notes.

When present, a representative amount of taste modifier is about 0.01% by weight or more, about 0.1% by weight or more, or about 1.0% by weight or more, but will typically make up less than about 10% by weight of the total weight of the oral composition, (e.g., from about 0.01%, about 0.05%, about 0.1%, or about 0.5%, to about 1%, about 5%, or about 10% by weight of the total weight of the composition).

In some embodiments, the oral composition may further comprise a salt (e.g., alkali metal salts), typically employed in an amount sufficient to provide desired sensory attributes to the oral composition. Non-limiting examples of suitable salts include sodium chloride, potassium chloride, ammonium chloride, calcium chloride, flour salt, and the like. When present, a representative amount of salt is about 0.25 percent by weight or more, about 1.0 percent by weight or more, or at about 1.5 percent by weight or more, but will typically make up about 10 percent or less of the total weight of the composition, or about 7.5 percent or less or about 5 percent or less (e.g., about 0.5 to about 5 percent by weight).

The oral composition may further comprise one or more sweeteners. The sweeteners can be any sweetener or combination of sweeteners, in natural or artificial form, or as a combination of natural and artificial sweeteners. Examples of natural sweeteners include isomaltulose, fructose, sucrose, glucose, maltose, mannose, galactose, lactose, stevia, honey, and the like. Examples of artificial sweeteners include sucralose, maltodextrin, saccharin, aspartame, acesulfame K, neotame and the like. In some embodiments, the sweetener comprises one or more sugar alcohols. Sugar alcohols are polyols derived from monosaccharides or disaccharides that have a partially or fully hydrogenated form. Sugar alcohols have, for example, about 4 to about 20 carbon atoms and include erythritol, arabitol, ribitol, isomalt, maltitol, dulcitol, iditol, mannitol, xylitol, lactitol, sorbitol, and combinations thereof (e.g., hydrogenated starch hydrolysates). In some embodiments, the composition provided herein can include a sugar alcohol (e.g., xylitol or erythritol) in combination with a lesser amount of artificial or non-nutritive sweetener (e.g., sucralose, aspartame, acesulfame K, or any combination thereof). When present, a representative amount of sweetener may make up from about 0.1 to about 20 percent or more of the of the composition by weight, for example, from about 0.1 to about 1%, from about 1 to about 5%, from about 5 to about 10%, or from about 10 to about 20% of the composition on a weight basis, based on the total weight of the composition.

In some embodiments, one or more humectants may be employed in the oral composition. Examples of humectants include, but are not limited to, polyols such as glycerin/glycerol, propylene glycol, and the like; diethylene glycol, triethylene glycol, tetraethylene glycol, 1,3-butylene glycol, erythritol, meso-Erythritol, triethyl citrate, triacetin, a diacetin mixture, and lauric acid. The filler material may comprise about 1wt%, 3wt%, 5wt%, 10wt%, 15wt%, or 20wt% to about 80wt%, 60wt%, 50wt%, 40wt% or 30wt% of humectant (all calculated on a dry weight basis). In some embodiments, the filler material comprises 1-80wt%, 5-60wt%, or 10-50wt% of humectant (all calculated on a dry weight basis). In other embodiments, the filler material comprises 10-45wt%, 20-40wt% or 30-40wt% of humectant (all calculated on a dry weight basis). In some embodiments, the filler material comprises 10-45wt%, 10-40wt% or 15-30wt% of humectant (all calculated on a dry weight basis). These amounts represent the total amount of humectant(s) in the filler material.

In some embodiments, the oral composition of the present disclosure can comprise pH adjusters or buffering agents. Examples of pH adjusters and buffering agents that can be used include, but are not limited to, metal hydroxides (e.g., alkali metal hydroxides such as sodium hydroxide and potassium hydroxide), and other alkali metal buffers such as metal carbonates (e.g., potassium carbonate or sodium carbonate), or metal bicarbonates such as sodium bicarbonate, and the like. Non-limiting examples of suitable buffers include alkali metal acetates, glycinates, phosphates, glycerophosphates, citrates, carbonates, hydrogen carbonates, borates, or mixtures thereof. Where present, the buffering agent or pH adjuster is typically present in an amount less than about 5 percent based on the weight of the composition, for example, from about 0.1% to about 1%, about 0.1% to about 0.5%, or 0.5% to about 5%, such as, e.g., from about 0.75% to about 4%, from about 0.75% to about 3%, or from about 1% to about 2% by weight, based on the total weight of the oral composition.

In some embodiments, at least one pH adjuster is added to the composition to further enhance stability of a volatile flavorant or active ingredient contained therein. For example, sufficient pH adjuster could be added to the composition to maintain a pH level below 7, such as about 4 to about 7.

In some embodiments, the oral composition can include an oral care ingredient, which can provide various oral health benefits, such as inhibiting tooth decay or loss, inhibiting gum disease, relieving mouth pain, whitening teeth, inhibiting tooth staining, eliciting salivary stimulation, inhibiting breath malodour, freshening breath, and the like. Examples of oral health components include xylitol, thyme oil, eucalyptus oil, and zinc or zinc-containing compounds like zinc citrate. In some embodiments, commercially available products sold under the brand names ZYTEX® from Discus Dental, MALTISORB® by Roquette, and DENTIZYME® by NatraRx can be incorporated into the composition. A representative amount of oral health ingredient (or combination of oral health ingredients) is at least about 1%, often at least about 3%, and frequently at least about 5% of the total dry weight of the composition. The amount of oral health component within the composition will not typically exceed about 30%, often will not exceed about 25%, and frequently will not exceed about 20%, of the total weight of the oral composition.

A first method may comprise:

(a) forming a mixture comprising a solvent; an active; a crosslinkable binder; optionally a bulking agent; and optionally an acid;
(b) ejecting the mixture through a nozzle such that the mixture moves with a velocity; and
(c) contacting the ejected mixture with a solution comprising a cross-linking agent, where the velocity of the mixture is reduced on contact with the solution.

Step (a) comprises forming a mixture or slurry comprising components of the filler material or precursors thereof and a solvent (typically water). The slurry or mixture formed in step (a) therefore comprises a crosslinkable binder (i.e. a precursor to the crosslinked binder which is present in the material of the invention), an active, and optionally a bulking agent and an acid. The mixture or slurry may comprise these components on a dry weight basis in any of the proportions given herein in relation to the composition of the filler material.

Step (b) comprises ejecting the mixture through a nozzle. The shape of the nozzle may determine the cross-section of the material which is formed by the method of the invention. In some embodiments the nozzle has a circular shape. In this case, the cross-section of the final material will be circular or substantially circular. As used herein, the term "nozzle" may be used interchangeably with terms "orifice" or "aperture".

In some embodiments, the nozzle has a diameter of from about 0.05 mm, 0.2 mm, 0.5 mm, 1.5 mm or 1.5 mm to about 4 mm, 3.0 mm, 2.5 mm or 1.5 mm. In some embodiments, the nozzle has a diameter of from about 0.05 to about 4 mm, from about 0.5 to about 4 mm, from about 1.0 to about 3.0 mm, or from about 1.5 to about 2.5 mm.

In some embodiments, the nozzle has a diameter of from about 0.05 mm, 0.1 mm, 0.2 mm or 0.3mm to about 3.0 mm, 2.0 mm, 1.0 mm, or 0.7mm. In some embodiments, the nozzle has a diameter of from about 0.05 to about 3.0 mm, from about 0.1 to about 2.0 mm, from about 0.2 to about 1.0 mm, or from about 0.3 to about 0.7 mm.

As used herein, the term "eject" is also intended to encompass the terms "extrude" and "dispense". Thus, in some embodiments step (b) comprises dispensing the mixture through a nozzle. In some embodiments, step (b) comprises extruding the mixture through a nozzle.

After the mixture is ejected from the nozzle, it has a velocity. This velocity may be imparted by gravity, i.e. because the mixture is ejected from the nozzle into a medium in which it can fall (e.g. air). Alternatively and/or additionally, the velocity may be imparted by the ejection process, i.e. because the mixture is forced through the nozzle and kinetic energy is imparted to the mixture. The mixture is generally ejected in the form of a continuous stream or flow of material.

In some embodiments the mixture is ejected from the nozzle into a gaseous medium, such as air.

The mixture may be contacted with the crosslinking agent by ejecting the mixture into a medium such as air directly above a solution comprising the crosslinking agent, with gravity (optionally together with any force applied to eject the mixture from the nozzle) acting to bring the mixture into contact with the solution.

Alternatively, the mixture may be contacted with the solution comprising the crosslinking agent by ejecting the mixture with force. In this case the nozzle may be positioned directly above the solution but may also and/or alternatively be positioned to the side of the solution, or even below the solution. The angle between the direction of the nozzle (i.e. the direction in which the mixture is initially ejected) and the surface of the solution may be changed. When the nozzle is positioned directly above the solution this angle is 90°. When the nozzle is directly to the side of the solution (i.e. parallel to the solution) this angle is 0°. In one embodiment, this angle is 90°. In another embodiment, this angle is less than about 90° and greater than about 0°. In some embodiments, this angle is from about 10° to about 85°, from about 20° to about 80°, or from about 30° to about 75°.

Thus, in one aspect the nozzle is positioned directly above the surface of the solution comprising a cross-linking agent. However, this may not be necessary if the mixture is forced from the nozzle such that it does not move directly downwards after ejection.

In some embodiments, the nozzle is positioned at a distance of from about 0.5 to about 100 cm above the surface of the solution comprising a cross-linking agent, such as from about 1 to about 50 cm or from about 2 to about 20 cm. If the distance between the nozzle and the surface of the solution is increased, the diameter of the resulting non-linear strands may decrease. Positioning the nozzle at a distance from the surface of the solution beyond the ranges disclosed herein may therefore result in the diameter of the non-linear strand being significantly reduced compared to the diameter of the nozzle.

In some embodiments, the quantity of solution and the vessel used to hold the solution comprising a cross-linking agent are selected such that the depth of solution at the point of impact is at least about 1 cm, 2 cm, 3 cm or 5 cm, and may be less than about 50 cm, 30 cm, 20 cm or 10 cm, In some embodiments, the depth of solution at the point of impact is from about 1 to about 50 cm, from about 2 to about 30 cm, or from about 3 to about 10 cm.

The nozzle may be stationary or may move as the mixture is ejected. For example, the nozzle may move over the surface of the solution comprising the cross-linking agent as the mixture is ejected. Alternatively, the nozzle may be stationary and the solution comprising the cross-linking agent may be moved as the mixture is ejected. Having at least one of the nozzle and/or the solution moving during the process may be useful where the overall process is continuous, and this may help to prevent overlapping of individual strands.

In some embodiments the nozzle may eject the mixture in a series of pulses. For example, step (c) may comprise pausing the ejection of the mixture from the nozzle at selected time intervals. This method may avoid or reduce the need to cut the strands. The length of the strands may be determined by the length of the time intervals. Generally, the longer the time interval the longer the strands.

Step (c) comprises contacting the ejected mixture with a solution comprising a crosslinking agent, where the velocity of the mixture is reduced on contact with the solution.

Once the material is contacted with the cross-linking agent the crosslinkable binder will crosslink, thereby forming the cross-linked binder. Without wishing to be bound by theory, it is believed that when the ejected mixture is contacted with the solution comprising the crosslinking agent the binder immediately crosslinks. This, combined with the reduction in velocity resulting from the impact of the mixture with the solution, is believed to result in the formation of the non-linear strands or gel fibres of the invention. Thus, the result of step (c) is a filler material in the form of non-linear strands or gel fibres, i.e. a filler material as defined herein.

In some embodiments, the solution comprising a cross-linking agent is provided in a vessel into which the ejected mixture falls and/or is forced. In some embodiments, the solution is sprayed or otherwise applied onto the mixture after it is ejected and whilst it is moving with a velocity, with the contact between the ejected mixture and the crosslinking solution resulting in the desired reduction in the velocity of the ejected mixture.

The crosslinking agent is used in the present methods in the form of a solution comprising the cross-linking agent. In some embodiments, the solution is an aqueous solution comprising water and the cross-linking agent. Generally, the crosslinking agent is present in the solution in an excess amount, such that crosslinking agent remains after the binder is crosslinked. In some embodiments, the concentration of cross-linking agent in the solution may range from about 0.01 M to about 2.0 M, from about 0.3 M to about 1.5 M, or from about 0.5 M to about 1.0 M.

Suitable crosslinking agents and amounts thereof are set out above. For example, the slurry may comprise sodium, potassium or ammonium alginate as a precursor to the binder, and a setting agent or crosslinking agent comprising a calcium source (such as calcium formate, calcium acetate or calcium lactate) may be used to form a calcium alginate gel or binder.

Alginate salts are derivatives of alginic acid and are typically high molecular weight polymers (10-600 kDa). Alginic acid is a copolymer of $\beta$-D-mannuronic (M) and $\alpha$-L-guluronic acid (G) units (blocks) linked together with (1,4)-glycosidic bonds to form a polysaccharide. On addition of calcium cations, the alginate crosslinks to form a gel. Alginate salts with a high G monomer content more readily form a gel on addition of the calcium source. In some cases therefore, the gel-precursor may comprise an alginate salt in which at least about 40%, 45%, 50%, 55%, 60% or 70% of the monomer units in the alginate copolymer are $\alpha$-L-guluronic acid (G) units.

In some embodiments, the solution in step (c) further comprises one or more of a flavourant, and a botanical extract. In some embodiments, the flavourant is water-soluble.

When present, each of these components can enter (e.g. diffuse into) the non-linear strands or gel fibres of the invention.

The amount of additional component (e.g. botanical extract) in the resulting non-linear strands may vary depending on how long the material is in contact with the solution. Generally, the longer the contact time between the material and the solution, the greater the amount of flavourant, active, and/or botanical extract in the resulting non-linear strands. Thus, the amount of flavourant, active, and/or botanical extract in the non-linear strands can be controlled by the contact time between the material and the solution. In some embodiments, the contact time between the material and the solution may be less than about 120 seconds. In some embodiments, the contact time between the material and the solution may range from about 5 seconds to about 120 seconds, from about 10 seconds to about 60 seconds, or from about 10 seconds to about 30 seconds.

In some embodiments, the solution further comprises a botanical extract in addition to the crosslinking agent. Suitable botanical extracts are set out above. The botanical extract can contain metal (e.g. calcium) ions which may cause crosslinking of the crosslinkable binder. As such, less crosslinking agent may be needed. In some embodiments, the concentration of botanical extract in the solution may range from about 20 wt.% to about 90 wt.%, from about 25 wt.% to about 75 wt.%, or from about 30 wt.% to about 50 wt.%.

Adding a botanical extract to the mixture in step (a) may result in early crosslinking of the crosslinkable binder, due to any metal (e.g. calcium) ion content of the botanical extract. This may result in undesired crosslinking of the mixture or slurry during step (a) before it is ejected through the nozzle and contacts the solution in step (b) and (c). This may prevent the slurry from being ejected through the nozzle and therefore prevent the formation of non-linear strands.

When forming materials containing a botanical extract it may therefore be advantageous to form a slurry which does not comprise a botanical extract in step (a), and eject said slurry into a solution comprising a botanical extract. This method may also reduce the amount of crosslinkable binder required in the solution.

In some embodiments, the solution in step (c) further comprises another component of the filler material, which may then diffuse into the material in the same way as the botanical extract. For example, the solution may further comprise a flavourant, such as a water-soluble flavourant, in addition to a botanical extract.

Alternatively, it may be desirable to include a component of the filler material in the solution in order to prevent diffusion or loss of the component out of the material when it is in contact with the solution. For example, it may be useful to include the active. This may prevent or decrease loss of the active during the manufacturing process.

The method of the invention may further comprise:

> (d) separating the material formed in step (c) (e.g. the cross-linked material, which is in the form of non-linear strands) from the solution comprising the cross-linking agent; and
> (e) drying the material.

Step (d) of separating the material from the solution comprising the cross-linking agent may comprise manually removing the material from the solution, e.g. through filtration or sieving.

The process described hereby may be continuous or batch process, but is generally a continuous process.

The drying step (e) may comprise any suitable drying methods, including but not limited to, infrared (IR) heating, convention heating, air impingement, conductive heating and microwave heating. Conductive heating may comprise heating a surface on which the material is placed. The surface may be, for example, a metal or metal alloy (e.g. stainless steel) band. The surface may itself heat up (e.g. it is the surface of a heater) or be indirectly heated. For example, the surface may be heated from below, for example using steam. In some embodiments the drying step (e) is performed using a belt dryer.

The drying step (e) may, in some cases, remove from about 50wt%, 60wt%, 70wt%, 80wt% or 90wt% to about 80wt%, 90wt% or 95wt% (WWB) of water in the slurry.

Drying may be performed at suitable temperature, for example from room temperature (25 °C) to about 200 °C, such as from about 50 °C to about 150 °C or from about 100 °C to about 130 °C. As the skilled person would appreciate, higher temperatures may allow for faster drying times, but can be more energy intensive. In some embodiments the material is dried for from about 30 seconds to about 10 minutes, such as from about 1 minute to about 5 minutes, such as from about 2 minutes to about 4 minutes.

The drying step (e) may, in some cases, reduce the average diameter of each of the strands by at least about 20%, such as between about 20% and about 90 %, or between about 30% and about 70%.

During step (e) the material may be heated to remove at least about 60wt%, 70wt%, 80wt%, 85wt% or 90wt% of the solvent, which is typically water.

Following drying step (e), the filler material may have a water content as defined above. In particular, the material may have of from 1wt % to 15wt% (WWB). Suitably, the water content of the material may be from about 5wt%, 7wt% or 9wt% to about 15wt%, 13wt%, 11wt%, 9wt% or 8wt% (wet weight basis) (WWB). In some embodiments, the material has a water content of less than about 9wt% (WWB), such as less than about 8wt% (WWB). The water content of the material may, for example, be determined by Karl-Fischer-titration or Gas Chromatography with Thermal Conductivity Detector (GC-TCD).

In some cases, the solvent which is part of the slurry or mixture may consist essentially of or consist of water. In some cases, the slurry or mixture may comprise from about 50wt%, 60wt%, 70wt%, 80wt% or 90wt% of solvent (WWB).

The method of the invention may also comprise cutting the non-linear strands to a desired free length. This step may occur before or after drying. The desired free length may be as set out hereinabove.

In some embodiments, the material is cut into a plurality of non-linear strands before drying step (e). Cutting the material into a plurality of non-linear strands (each shorter than the non-linear strand(s) initially formed) before drying the material can reduce tangling of the material, which can in turn make the material easier to process and/or incorporated into an article. Reducing tangling of the material may also make it easier to form a homogeneous mixture if the material is blended with tobacco.

In some embodiments, the non-linear strands may be arranged to form a net or mesh-like structure. In some embodiments, the non-linear strands may be joined or woven together to form sheets of the material. Such structures may be formed by arranging the strands into the shape of a net or mesh (e.g. a grid formation) before, during and/or after drying.

The method of the invention may further comprise:

(f) placing the material in a water-permeable pouch to form an oral product.

A second method may comprise:

(a) forming a mixture or slurry comprising a solvent, an active and/or a flavourant, a binder, optionally a bulking agent, optionally a setting agent or crosslinking agent, and optionally an acid;

(b) casting the mixture or slurry in a mould.

Step (a) comprises forming a mixture or slurry similar to the first method.

Step (b) comprises casting the slurry in a mould. To form non-linear strands the mould must be a suitable shape. That is, the mould must be non-linear in shape. The skilled person would understand how materials may be formed using moulds, and would therefore understand the shape of mould needed to form a non-linear strand. Specifically, during a moulding process a slurry (which is flowable) is poured into or otherwise inserted into a mould, at which point it assumes the shape of the mould (or more specifically the mould cavity). After setting and/or drying the resulting material may be removed from the mould, or the mould may be removed from the material, and the resulting material will be in the shape of the mould.

By way of example, a strand having a spiral or helical shape could be formed using a mould having a spiral or helical shape, i.e. where the mould cavity has a spiral or helical shape. For such a shape, and for non-linear strands in general, it may be easier to remove the material from the mould if the mould is formed from two or more separable pieces or components. In this case, to assist removal of the material from the mould it is possible to separate the mould pieces or components.

As used herein, the term mould is used interchangeable with the term mould cavity.

In some embodiments the method is an injection moulding method. In this case, step (b) may comprise injection moulding the mixture or slurry. As discussed above, the mould may have a suitable shape to result in one or more non-linear strands. For example, the mould may be in a shape of a non-linear strand. In some embodiments, the mould is in the shape of a net, a mesh or a mesh-like structure. Such a structure is essentially made up of multiple non-linear strands which are joined together in a grid-like system. The resulting net or mesh will therefore also be non-linear in shape. That is, each strand of the net or mesh is non-linear. In some embodiments, the mould is in the shape of a net or mesh, wherein each strand of the net or mesh is non-linear. This may allow for the formation of an filler material in the form of a net or mesh, wherein each strand of the net or mesh is non-linear.

The process for forming the materials of the present invention may be beneficial when seeking to form uniform strands and shapes. That is, the process is highly repeatable, and the strands and shapes formed from the process may all be identical or essentially identical, assuming the same mould or same shape mould is used each time. More generally, the shape, size, and other parameters of the strands or other shapes can be easily controlled by selecting the size and shape of the mould.

For example, the cross-section of the mould may determine the cross-section of the material which is formed by the method of the invention. In some embodiments the mould has a cylindrical cross-section. In this case, the cross-section of the final material will be circular or substantially circular.

The second method may further comprise:

(c) removing the filler material from the mould;

(d) drying the material; and

(e) placing the dried material in a pouch to form an oral product.

Step (c) of removing the material from the mould may comprise manually removing the material from the mould.

The mould may be separated and the material removed.

The drying step (d) may comprise any suitable drying methods, including but not limited to, infrared (IR) heating, convention heating, air impingement, conductive heating and microwave heating. Conductive heating may comprise heating a surface on which the material is placed. The surface may be, for example, a metal or metal alloy (e.g. stainless steel) band. The surface may itself heat up (e.g. it is the surface of a heater) or be indirectly heated. For example, the surface may be heated from below, for example using steam. In some embodiments the drying step (d) is performed using a belt dryer.

The drying step (d) may, in some cases, remove from about 50wt%, 60wt%, 70wt%, 80wt% or 90wt% to about 80wt%, 90wt% or 95wt% (WWB) of water in the slurry.

Drying may be performed at suitable temperature, for example from room temperature (25 °C) to about 200 °C, such as from about 50 °C to about 150 °C or from about 100 °C to about 130 °C. As the skilled person would appreciate, higher temperatures may allow for faster drying times, but can be more energy intensive. In some embodiments the material is dried for from about 30 seconds to about 10 minutes, such as from about 1 minute to about 5 minutes, such as from about 2 minutes to about 4 minutes.

The drying step (d) may, in some cases, reduce the average diameter of each of the strands by at least about 20%, such as between about 20% and about 90 %, or between about 30% and about 70%.

The solvent can be the same solvent as that discussed in relation to the first method.

The drying step may be performed before, during or after the material is removed from the mould. In some embodiments, step (c) of removing the filler material from the mould occurs after drying step (d).

The method of the invention may also comprise cutting the non-linear strands to a desired free length, after the material is removed from the mould. This step may occur before or after drying. The desired free length may be as set out hereinabove.

In some embodiments, the material is cut into a plurality of non-linear strands before drying step (d). Cutting the material into a plurality of non-linear strands (each shorter than the non-linear strand(s) initially formed) before drying the material can reduce tangling of the material, which can in turn make the material easier to process and/or incorporated into an oral composition.

Pouched products can be formed from a fleece material, e.g., fibrous nonwoven webs. A "fleece material" as used herein may be formed from various types of fibres (e.g., cellulosic fibres, such as viscose fibres, regenerated cellulose fibres, cellulose fibres, and wood pulps; cotton fibres; other natural fibres; or polymer/synthetic-type fibres; or combinations thereof) capable of being formed into a traditional fleece fabrics or other traditional pouch materials. For example, fleece materials may be provided in the form of a woven or nonwoven fabric.

The term "nonwoven" is used herein in reference to fibrous materials, webs, mats, batts, or sheets in which fibres are aligned in an undefined or random orientation. The nonwoven fibres are initially presented as unbound fibres or filaments. An important step in the manufacturing of nonwovens involves binding the various fibres or filaments together. The manner in which the fibres or filaments are bound can vary, and include thermal, mechanical and chemical techniques that are selected in part based on the desired characteristics of the final product, as discussed in more detail below.

In some embodiments, the fibres within the fleece material may include, but are not limited to, a polymer selected from the group consisting of polyglycolic acid, polylactic acid, polyhydroxyalkanoates, polycaprolactone, polybutylene succinate, polybutylene succinate adipate, and copolymers thereof. In some embodiments, the fibres within the fleece material may be selected from the groups consisting of wool, cotton, fibres made of cellulosic material, such as regenerated cellulose, cellulose acetate, cellulose triacetate, cellulose nitrate, ethyl cellulose, cellulose acetate propionate, cellulose acetate butyrate, hydroxypropyl cellulose, methyl hydroxypropyl cellulose, protein fibres, and the like. In various embodiments, the pouch material can include a polymer selected from the group consisting of polyvinylpyrrolidone, polyvinyl alcohol, and combinations thereof.

Regenerated cellulose fibres (e.g., viscose or lyocell fibres) can be particularly advantageous, and are typically prepared by extracting non-cellulosic compounds from wood, contacting the extracted wood with caustic soda, followed by carbon disulfide and then by sodium hydroxide, giving a viscous solution. The solution is subsequently forced through spinneret heads to create viscous threads of regenerated fibres. The manner in which the regenerated cellulose is made is not limiting, and can include, for example, both the rayon and the TENCEL processes. Various suppliers of regenerated cellulose are known, including Lenzing (Austria), Cordenka (Germany), Aditya Birla (India), and Daicel (Japan).

In some embodiments, the weight of the oral composition within each pouch is at least about 50 mg, for example, from about 50 mg to about 1 gram, from about 100 to 800 about mg, or from about 200 to about 700 mg. In some smaller embodiments, the weight of the composition within each pouch may be from about 100 to about 300 mg. For a larger embodiment, the weight of the composition within each pouch may be from about 300 mg to about 700 mg.

The following clauses are for information only. They are not intended to be considered claims

**Clauses**

1. An oral composition comprising a filler material in the form of one or more non-linear strands, wherein the filler material comprises an active and/or a flavourant and a crosslinked binder.

2. The oral composition according to clause 1, wherein each of the non-linear strands has a diameter of from about 0.05 mm to about 3 mm, such as from about 0.1 mm to about 2 mm, such as from about 0.2 mm to about 1.1 mm, such as from about 0.3 mm to about 0.6 mm.

3. The oral composition according to clause 1, wherein each of the non-linear strands has a thickness of from about 0.05 mm to about 3 mm, such as from about 0.1 mm to about 2 mm, such as from about 0.2 mm to about 1.1 mm, such as from about 0.3 mm to about 0.6 mm.

4. The oral composition according to any one of clauses 1 to 3, wherein the ratio of the diameter to the thickness of each of the non-linear strands is from about 1:2 to about 2:1.

5. The oral composition according to any one of clauses 1 to 3, wherein the ratio of the diameter to the thickness of each of the non-linear strands is from about 3:2 to about 2:3.

6. The oral composition according to any one of clauses 1 to 3, wherein the ratio of the diameter to the thickness of each of the non-linear strands is about 1:1.

7. The oral composition according to any one of clauses 1 to 6, wherein each of the non-linear strands has an uncoiled length of from about 8 mm to about 200 mm; such as from about 10 mm to about 200 mm; such as from about 20 mm to about 100 mm; such as from about 30 mm to about 50 mm.

8. The oral composition according to any one of clauses 1 to 7, wherein each of the non-linear strands has a coiled length of from about 2 mm to about 35 mm; such as from about 3 mm to about 25 mm; such as from about 6 mm to about 23 mm; such as from about 8 mm to about 22 mm; such as from about 11 m to about 20 mm.

9. The oral composition according to any one of clauses 1 to 8, wherein the uncoiled length is greater than the coiled length.

10. The oral composition according to any one of clauses 1 to 9, wherein the ratio between the uncoiled length and the coiled length of each non-linear strand is at least about 1.2, such as at least about 1.3, such as at least about 1.5, such as at least about 2.0.

11. The oral composition according to any one of clauses 1 to 10, wherein the ratio between the uncoiled length and the coiled length of each non-linear strand is less than about 10, such as less than about 8, such as less than about 8, such as less than about 6.

12. The oral composition according to any one of clauses 1 to 11, wherein the ratio between the uncoiled length and the coiled length of each non-linear strand is from about 1.2 to about 10, such as from about 1.5 to about 5, such as from about 2 to about 5.

13. The oral composition according to any one of clauses 1 to 12, wherein the ratio between the uncoiled length and the diameter of each of the non-linear strands is from about 5 to about 200, such as from about 20 to about 50.

14. The oral composition according to any one of clauses 1 to 13, wherein the tensile strength of each strand ranges from about 0.1 N to about 3.0 N, such as from about 0.2 N to about 2.0 N, such as from about 0.3 N to about 1.0 N.

15. The oral composition according to any one of clauses 1 to 8, wherein the filler material has a fill value of from about 3 $cm^3/g$ to about 10 $cm^3/g$, such as from about 4.5 $cm^3/g$ to about 9 $cm^3/g$, or such as from about 3 $cm^3/g$ to about 7 $cm^3/g$, or such as from about 3.5 $cm^3/g$ to about 6 $cm^3/g$, or such as from about 4 $cm^3/g$ to about 6 $cm^3/g$.

16. The oral composition according to any one of clauses 1 to 15, wherein the filler material comprises from about 1 wt% to about 60 wt% binder, such as from about 5 wt% to about 50 wt%, such as from about 6 wt% to about 40 wt%, such as from about 7 wt% to about 30 wt%, such as from about 10 wt% to about 25 wt%, such as from about 15 wt% to about 25 wt%.

17. The oral composition according to any one of clauses 1 to 16, wherein the binder comprises crosslinked alginate, pectin and/or iota-carrageenan.

18. The oral composition according to any one of clauses 1 to 17, wherein the filler material is substantially free of cellulosic binder.

19. The oral composition according to any one of clauses 1 to 18, wherein the filler material is substantially free of carboxymethylcellulose.

20. The oral composition according to any one of clauses 1 to 19, wherein the filler material comprises a crosslinked binder and a non-crosslinked binder.

21. The oral composition according to any one of clauses 1 to 20, wherein the filler material comprises wood pulp, hemp fibre, cellulose, cellulose derivatives, such as MCC, nanocellulose, and/or ground cellulose.

22. The oral composition according to clause 21, wherein the filler material comprises wood pulp, hemp fibre, cellulose, cellulose derivatives, such as MCC, nanocellulose, and/or ground cellulose in an amount of from about 1 wt% to about 70 wt%, such as from about 10 wt% to about 65 wt%, such as from about 20 wt% to about 60 wt%, such as from about 30 wt% to about 60 wt%, such as from about 40 wt% to about 60 wt%, such as from about 10 wt% to about 80 wt%, such as from about 20 wt% to about 70 wt%, such as from about 30 wt% to about 65 wt%, such as from about 40 wt% to about 65 wt%.

23. The oral composition according to clause 21, wherein the filler material comprises wood pulp, hemp fibre, cellulose, cellulose derivatives, such as MCC, nanocellulose, and/or ground cellulose in an amount less than about 70 wt%, such as less than about 60 wt%, such as less than about 50 wt%, such as less than about 40 wt%, such as less than about 30 wt%, such as less than about 20 wt%, such as less than about 10 wt%.

24. The oral composition according to any one of clauses 1 to 23, wherein the filler material has a water content of less than about 9 wt%, such as less than about 8 wt%.

25. The oral composition according to any one of clauses 1 to 24, wherein the filler material comprises from about 1 wt% to about 70 wt% particulate botanical material, such as from about 5 to about 60 wt%, such as from about 10 wt% to about 50 wt%, such as from about 30 wt% to about 40 wt%.

26. The oral composition according to any one of clauses 1 to 25, wherein the filler material further comprises a crosslinking agent, such as wherein the crosslinking agent comprises calcium ions, such as wherein the crosslinking agent comprises calcium lactate, calcium acetate and/or calcium formate.

27. The oral composition according to any one of clauses 1 to 26, wherein the oral composition is substantially free from tobacco.

28. The oral composition according to any one of clauses 1 to 26, wherein the filler material is substantially free from tobacco.

29. The oral composition according to any one of clauses 1 to 28, wherein the active is selected from the list consisting of: a nicotinic component, nutraceuticals, botanicals, stimulants, amino acids, vitamins, cannabinoids, terpenes, and combinations thereof.

30. A pouched product comprising the oral composition according to any one of clauses 1 to 29.

31. A method of making the filler material of any of clauses 1 to 30, the method comprising:

(a) forming a mixture comprising

17

- a crosslinkable binder;
- an active;
- optionally a filler; and
- a solvent;

(b) ejecting the mixture through a nozzle such that the mixture moves with a velocity; and
(c) contacting the ejected mixture with a solution comprising a cross-linking agent, where the velocity of the mixture is reduced on contact with the solution.

32. The method according to clause 31, further comprising:
(d) separating the material formed in step (c) from the solution comprising the crosslinking agent, optionally further comprising: (e) drying the material.

33. The method according to clause 32, wherein the material is cut into a plurality of non-linear strands before drying.

34. The method according to clause 33, further comprising (f) placing the material in a water-permeable pouch to form an oral pouched product.

35. The method according to any one of clauses 31 to 34, wherein the solvent is water.

36. Use of a filler material in the form of one or more non-linear strands in an oral product, wherein the filler material comprises an active and a crosslinked binder.

37. An oral composition comprising a moulded filler material in the form of one or more non-linear strands.

38. The oral composition according to clause 37, wherein the filler material comprises a binder and an active and/or flavourant.

39. The oral composition according to clause 37 or clause 38, wherein the non-linear strands are arranged as a mesh of mesh-like structure.

40. A method of making an oral composition according to any one of clauses 37 to 39, the method comprising:

(a) forming a mixture comprising:

- a binder;
- an active and/or a flavourant;
- optionally a setting agent;
- optionally a filler;

(b) casting the slurry into a mould.

**Examples**

The materials were conditioned in 22±1°C and 60±2%RH for 48hs.

Example 1

A gel slurry was made in a 10L Robot Coupe mixer (R 10 V.V Robot Coupe). Wood pulp having a Schopper Riegler of 70-80 SR was added to water to form a mixture of water and 3 wt% wood pulp. Alginate was added slowly over 5 minutes at a speed of 600RPM. Ground cellulose was then added slowly over 5 minutes into the slurry mix. This was followed by the addition of glycerol, mixed with water, which was added over 2 minutes. The final gel slurry was left to mix for a further 10 minutes before it was poured into a beaker. This slurry mix was then slowly stirred using an overhead mixer. The gel slurry had a 15% solid content.
The resultant slurry comprised wood pulp (7.5wt%), alginate algogel 6021 (7.5wt%), glycerol (50wt%), and ground cellulose (35wt%) (all weight percentages on a dry weight basis).
The gel slurry was pumped into a 0.06M calcium formate bath solution using a 620S Watson Marlow peristaltic pump, using a 2.0mm circular nozzle. The residence time was 0 mins (gel strands in mesh tray were removed immediately) and gel strands were dried at 70°C for 3 hours.

Once dried, the strands were divided into four batches. One batch was left uncut (Material 1) and the other three were cut to 1, 2 and 3cm cut lengths (Materials 2, 3 and 4 respectively).

The tensile strength of individual strands selected from the material was measured using tensile/compression instrument Instron 68TM-5 (TCT_004) using Bluehill Universal software. Non-linear strands to be tested were visually selected from the bulk sample material avoiding clumping with the rest of the sample and with approximately 4 to 6 cm coiled length. Strands were cut from the rest of the sample material.

Keyence VHX-6000 (DMI_001) was used to measure the coiled and uncoiled length of the strands. Selective sampling technique was applied instead of random sampling. Strands were visually selected avoiding clumping with the rest of the sample. Strands were cut from the rest of the sample.

Results from tensile testing in Newtons (N) and the coiled/uncoiled lengths are summarised in Tables 1-4 below.

Table 1: Tensile Strength Results

|  | **Material 1** | **Material 2** | **Material 3** | **Material 4** |
|---|---|---|---|---|
| Strand | Tensile Strength (N) | | | |
| 1 | 0.83 | 0.51 | 0.48 | 0.40 |
| 2 | 1.02 | 0.95 | 0.23 | 0.43 |
| 3 | 1.63 | 0.65 | 0.35 | 0.71 |
| 4 | 2.01 | 0.55 | 0.41 | 0.41 |
| 5 | 0.39 | 0.31 | 0.30 | 0.25 |
| 6 | 0.55 | 0.39 | 0.35 | 0.41 |
| 7 | 1.60 | 0.51 | 0.21 | 0.28 |
| 8 | 0.39 | 1.99 | 0.62 | 0.63 |
| 9 | 0.51 | 0.23 | 0.46 | 0.94 |
| 10 | 0.39 | 0.35 | 0.25 | 0.32 |
| 11 | 0.58 | 0.23 | 0.79 | 0.82 |
| 12 | 0.62 | 0.45 | 0.16 | 0.35 |
| 13 | 0.48 | 0.22 | 0.24 | 1.74 |
| 14 | 0.47 | 1.11 | 0.37 | 0.27 |
| 15 | 0.37 | 0.22 | 0.59 | 0.69 |
| 16 | 0.32 | 0.49 | 0.46 | 0.35 |
| 17 | 0.28 | 0.46 | 0.30 | 0.23 |
| 18 | 0.37 | 0.37 | 0.21 | 0.41 |
| 19 | 0.36 | 0.64 | 0.40 | 0.19 |
| 20 | 1.57 | 0.62 | 0.77 | 0.48 |
| 21 | 0.32 | 0.37 | 0.39 | 0.48 |
| 22 | 0.39 | 0.38 | 0.39 | 0.33 |
| 23 | 0.32 | 0.33 | 0.24 | 0.16 |
| 24 | 0.49 | 0.21 | 0.31 | 0.26 |
| 25 | 0.49 | 0.33 | 0.36 | 0.48 |
| **Mean** | 0.67 | 0.51 | 0.38 | 0.48 |
| **Min** | 0.28 | 0.21 | 0.16 | 0.16 |
| **Max** | 2.01 | 1.99 | 0.79 | 1.74 |

Table 2: Coiled Length Results

|  | Material 1 | Material 2 | Material 3 | Material 4 |
|---|---|---|---|---|
| Strand | Coiled length (mm) | | | |
| 1 | 16.32 | 9.54 | 8.42 | 14.48 |
| 2 | 15.19 | 9.82 | 14.77 | 17.43 |
| 3 | 12.02 | 9.56 | 9.12 | 17.15 |
| 4 | 12.26 | 10.69 | 14.88 | 12.81 |
| 5 | 13.10 | 10.43 | 16.71 | 16.68 |
| 6 | 10.92 | 6.58 | 12.99 | 14.91 |
| 7 | 15.03 | 9.76 | 14.48 | 17.14 |
| 8 | 13.24 | 9.92 | 15.97 | 15.34 |
| 9 | 16.41 | 8.85 | 10.63 | 17.61 |
| 10 | 15.25 | 8.06 | 15.65 | 16.37 |
| 11 | 13.16 | 9.60 | 18.45 | 13.25 |
| 12 | 16.31 | 7.77 | 15.76 | 19.89 |
| 13 | 16.19 | 17.08 | 14.50 | 11.45 |
| 14 | 15.91 | 9.64 | 17.49 | 18.84 |
| 15 | 17.42 | 8.81 | 15.09 | 16.29 |
| 16 | 12.34 | 14.10 | 11.04 | 14.08 |
| 17 | 15.23 | 18.67 | 15.12 | 10.54 |
| 18 | 18.90 | 12.28 | 11.14 | 17.08 |
| 19 | 13.41 | 8.55 | 16.62 | 11.84 |
| 20 | 11.77 | 14.24 | 18.40 | 17.85 |
| 21 | 17.92 | 13.75 | 17.32 | 19.29 |
| 22 | 20.43 | 18.57 | 11.71 | 12.19 |
| 23 | 15.67 | 17.73 | 15.51 | 14.40 |
| 24 | 15.28 | 19.23 | 18.79 | 15.56 |
| 25 | 12.24 | 14.97 | 7.24 | 11.13 |
| **Mean** | 14.88 | 11.93 | 14.31 | 15.34 |
| **Min** | 10.92 | 6.58 | 7.24 | 10.54 |
| **Max** | 20.43 | 19.23 | 18.79 | 19.89 |

Table 3: Uncoiled Length Results

|  | Material 1 | Material 2 | Material 3 | Material 4 |
|---|---|---|---|---|
| Strand | Uncoiled length (mm) | | | |
| 1 | 63.49 | 22.52 | 24.63 | 24.77 |
| 2 | 49.54 | 37.03 | 44.94 | 45.96 |
| 3 | 51.24 | 24.30 | 39.00 | 38.45 |
| 4 | 31.23 | 31.13 | 32.63 | 53.28 |
| 5 | 31.53 | 31.91 | 44.04 | 81.97 |
| 6 | 22.24 | 31.63 | 27.35 | 34.08 |

(continued)

|  | Material 1 | Material 2 | Material 3 | Material 4 |
|---|---|---|---|---|
| Strand | Uncoiled length (mm) | | | |
| 7 | 45.21 | 34.89 | 18.76 | 44.77 |
| 8 | 37.09 | 28.23 | 34.68 | 50.69 |
| 9 | 44.63 | 40.09 | 18.32 | 52.90 |
| 10 | 40.69 | 18.87 | 53.53 | 102.34 |
| 11 | 22.35 | 21.00 | 55.66 | 33.81 |
| 12 | 27.83 | 17.32 | 26.25 | 43.19 |
| 13 | 37.01 | 32.71 | 31.76 | 54.18 |
| 14 | 24.06 | 28.12 | 26.63 | 38.33 |
| 15 | 46.23 | 36.26 | 38.80 | 74.90 |
| 16 | 32.33 | 30.38 | 42.57 | 26.48 |
| 17 | 31.46 | 26.91 | 31.43 | 45.49 |
| 18 | 37.08 | 34.63 | 31.25 | 45.38 |
| 19 | 32.39 | 25.20 | 43.22 | 58.20 |
| 20 | 77.53 | 35.12 | 31.73 | 23.21 |
| 21 | 63.08 | 22.76 | 42.95 | 39.11 |
| 22 | 46.12 | 88.17 | 24.33 | 28.60 |
| 23 | 35.80 | 24.92 | 89.80 | 22.44 |
| 24 | 52.07 | 37.71 | 40.70 | 37.58 |
| 25 | 30.90 | 57.16 | 17.88 | 25.45 |
| **Mean** | 40.53 | 32.76 | 36.51 | 45.02 |
| **Min** | 22.24 | 17.32 | 17.88 | 22.44 |
| **Max** | 77.53 | 88.17 | 89.80 | 102.34 |

Table 4: Uncoiled/Coiled Results

|  | Material 1 | Material 2 | Material 3 | Material 4 |
|---|---|---|---|---|
| Strand | Uncoiled length / coiled length (ratio) | | | |
| 1 | 3.89 | 2.36 | 2.93 | 1.71 |
| 2 | 3.26 | 3.77 | 3.04 | 2.64 |
| 3 | 4.26 | 2.54 | 4.28 | 2.24 |
| 4 | 2.55 | 2.91 | 2.19 | 4.16 |
| 5 | 2.41 | 3.06 | 2.64 | 4.91 |
| 6 | 2.04 | 4.81 | 2.11 | 2.29 |
| 7 | 3.01 | 3.57 | 1.30 | 2.61 |
| 8 | 2.80 | 2.85 | 2.17 | 3.30 |
| 9 | 2.72 | 4.53 | 1.72 | 3.00 |
| 10 | 2.67 | 2.34 | 3.42 | 6.25 |
| 11 | 1.70 | 2.19 | 3.02 | 2.55 |
| 12 | 1.71 | 2.23 | 1.67 | 2.17 |

(continued)

|  | Material 1 | Material 2 | Material 3 | Material 4 |
|---|---|---|---|---|
| Strand | Uncoiled length / coiled length (ratio) | | | |
| 13 | 2.29 | 1.92 | 2.19 | 4.73 |
| 14 | 1.51 | 2.92 | 1.52 | 2.03 |
| 15 | 2.65 | 4.12 | 2.57 | 4.60 |
| 16 | 2.62 | 2.15 | 3.86 | 1.88 |
| 17 | 2.07 | 1.44 | 2.08 | 4.32 |
| 18 | 1.96 | 2.82 | 2.81 | 2.66 |
| 19 | 2.42 | 2.95 | 2.60 | 4.92 |
| 20 | 6.59 | 2.47 | 1.72 | 1.30 |
| 21 | 3.52 | 1.66 | 2.48 | 2.03 |
| 22 | 2.26 | 4.75 | 2.08 | 2.35 |
| 23 | 2.28 | 1.41 | 5.79 | 1.56 |
| 24 | 3.41 | 1.96 | 2.17 | 2.42 |
| 25 | 2.52 | 3.82 | 2.47 | 2.29 |
| **Mean** | 3.89 | 2.36 | 2.93 | 1.71 |
| **Min** | 1.51 | 1.41 | 1.30 | 1.30 |
| **Max** | 6.59 | 4.81 | 5.79 | 6.25 |

Example 2

A series of materials (Materials 5-9) according to Table 5 below were made by forming a gel slurry in a 10L Robot Coupe mixer (R 10 V.V Robot Coupe) as follows. Wood pulp having a Schopper Riegler of 70-80 SR was added to water to form a mixture of water and 3 wt% wood pulp. Alginate was added slowly over 5 minutes at a speed of 600RPM. Ground cellulose was then added slowly over 5 minutes into the slurry mix. This was followed by the addition of glycerol, mixed with water, which was added over 2 minutes. The final gel slurry was left to mix for a further 10 minutes before it was poured into a beaker. This slurry mix was then slowly stirred using an overhead mixer. The gel slurry had a 15% solid content.

The resultant slurry comprised wood pulp, alginate algogel 6021, glycerol and ground cellulose, with the percentages of each component set out in Table 5 below.

The gel slurry was pumped into a 0.06M calcium formate bath solution using a 620S Watson Marlow peristaltic pump, using a 2.0 mm, 1.5 mm or 0.5 mm diameter circular nozzle. The residence time in the bath solution was 0mins (gel strands in mesh tray were removed immediately) and the gel strands were subsequently dried at 70 °C for 3 hours.

Once dried, the strands of each material were divided into 4 batches and cut to 1, 2 and 3 cm cut lengths (one batch was left uncut).

The fill value of these materials was then measured as described in the description above. The results are shown in Table 5, where the fill value given is the average of three repeats for each batch of material.

Table 5: Fill value results

| Material No. | Nozzle size (mm) | Pump speed (RPM) | Slurry composition (DWB) | Cut length (cm) | Fill value (cm³/g) |
|---|---|---|---|---|---|
| 5 | 2 | 8 | Wood pulp (7.5wt%), alginate algogel 6021 (7.5wt%), glycerol (50wt%), ground cellulose (35wt%) | Uncut | 4.826 |
|  |  |  |  | 1 | 3.927 |
|  |  |  |  | 2 | 4.588 |
|  |  |  |  | 3 | 4.874 |

(continued)

| Material No. | Nozzle size (mm) | Pump speed (RPM) | Slurry composition (DWB) | Cut length (cm) | Fill value (cm³/g) |
|---|---|---|---|---|---|
| 6 | 1.5 | 8 | Wood pulp (7.5wt%), alginate algogel 6021 (7.5wt%), glycerol (50wt%), ground cellulose (35wt%) | 1 | 4.043 |
| | | | | 2 | 4.424 |
| | | | | 3 | 4.494 |
| 7 | 2 | 8 | Wood pulp (10wt%), alginate algogel 6021 (7.5wt%), glycerol (35wt%), ground cellulose (47.5wt%) | Uncut | 5.71 |
| | | | | 1 | 5.38 |
| | | | | 2 | 5.36 |
| | | | | 3 | 5.13 |
| 8 | 0.5 | 1 | Wood pulp (7.5wt%), alginate algogel 6021 (7.5wt%), glycerol (50wt%), ground cellulose (35wt%) | Uncut | 4.442 |
| | | | | 1 | 4.279 |
| | | | | 2 | 4.439 |
| | | | | 3 | 4.453 |
| 9 | 0.5 | 1 | Wood pulp (10wt%), alginate algogel 6021 (7.5wt%), glycerol (35wt%), ground cellulose (47.5wt%), | Uncut | 5.204 |
| | | | | 1 | 4.921 |
| | | | | 2 | 4.927 |
| | | | | 3 | 4.754 |

The fill value was also measured for a known comparative material comprising 50wt% glycerol, 7wt% wood pulp, 7wt% CMC and 36wt% ground cellulose. The fill value for this comparative material, which was not in the form of non-linear strands of the present invention, was measured to be 2.696 cm³/g.

Example 3

A gel slurry was made in a 10L Robot Coupe mixer (R 10 V.V Robot Coupe). Alginate was added slowly to water over 5 minutes at a speed of 600RPM. Ground cellulose was then added slowly over 5 minutes into the slurry mix. Microcrystalline cellulose (MCC) was then added slowly over 5 minutes into the slurry mix. This was followed by the addition of glycerol, mixed with water, which was added over 2 minutes. The final gel slurry was left to mix for a further 10 minutes before it was poured into a beaker. This slurry mix was then slowly stirred using an overhead mixer.

The resultant slurry comprised alginate algogel 6021 (7.5wt%), glycerol (20wt%), ground cellulose (50wt%), and MCC (22.5wt%) (all weight percentages on a dry weight basis).

The gel slurry was pumped into a 0.06M calcium formate bath solution using a 620S Watson Marlow peristaltic pump, using a 0.5mm circular nozzle. The residence time was 0 mins (gel strands in mesh tray were removed immediately) and gel strands were dried at 70°C for 3 hours.

Keyence VHX-6000 (DMI_001) was used to measure the coiled and uncoiled length of the strands as described in relation to Example 1. The results are shown in Table 6 below.

Table 6: Length Results

| Sample | Coiled Length (mm) | Uncoiled Length (mm) | Uncoiled/Coiled ratio |
|---|---|---|---|
| 1 | 6.54 | 23.31 | 3.56 |
| 2 | 5.35 | 15.81 | 2.96 |
| 3 | 4.79 | 11.55 | 2.41 |
| 4 | 3.74 | 15.13 | 4.05 |
| 5 | 4.70 | 20.66 | 4.40 |
| 6 | 3.97 | 10.70 | 2.70 |
| 7 | 4.83 | 9.84 | 2.04 |

(continued)

| Sample | Coiled Length (mm) | Uncoiled Length (mm) | Uncoiled/Coiled ratio |
|---|---|---|---|
| 8 | 6.12 | 33.72 | 5.51 |
| 9 | 3.74 | 13.83 | 3.70 |
| 10 | 8.00 | 26.75 | 3.34 |
| 11 | 4.21 | 8.44 | 2.00 |
| 12 | 5.28 | 19.09 | 3.62 |
| 13 | 6.51 | 12.63 | 1.94 |
| 14 | 5.15 | 18.04 | 3.50 |
| 15 | 6.33 | 16.83 | 2.66 |
| 16 | 15.40 | 17.99 | 1.17 |
| 17 | 8.93 | 24.72 | 2.77 |
| 18 | 8.19 | 9.33 | 1.14 |
| 19 | 3.84 | 12.55 | 3.27 |
| 20 | 4.81 | 8.91 | 1.85 |
| **Mean** | **6.02** | **16.49** | **2.93** |
| **Min** | **3.74** | **8.44** | **1.14** |
| **Max** | **15.40** | **33.72** | **5.51** |

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

## Claims

1. An oral composition comprising a filler material in the form of one or more non-linear strands, wherein the filler material comprises an active and/or flavourant, and a crosslinked binder.

2. The oral composition according to claim 1, wherein each of the non-linear strands has a diameter of from about 0.05 mm to about 3 mm, such as from about 0.1 mm to about 2 mm, such as from about 0.2 mm to about 1.1 mm, such as from about 0.3 mm to about 0.6 mm.

3. The oral composition according to claim 1 or claim 2, wherein the ratio of the diameter to the thickness of each of the non-linear strands is from about 1:2 to about 2:1.

4. The oral composition according to any one of claims 1 to 3, wherein each of the non-linear strands has an uncoiled length of from about 8 mm to about 200 mm; such as from about 10 mm to about 200 mm; such as from about 20 mm to about 100 mm; such as from about 30 mm to about 50 mm.

5. The oral composition according to any one of claims 1 to 4, wherein each of the non-linear strands has a coiled length of from about 2 mm to about 35 mm; such as from about 3 mm to about 25 mm; such as from about 6 mm to about 23 mm; such as from about 8 mm to about 22 mm; such as from about 11 m to about 20 mm.

6. The oral composition according to any one of claims 1 to 5, wherein the ratio between the uncoiled length and the coiled length of each non-linear strand is at least about 1.2 and less than about 10.

7. The oral composition according to any one of claims 1 to 6, wherein the tensile strength of each strand ranges from about 0.1 N to about 3.0 N, such as from about 0.2 N to about 2.0 N, such as from about 0.3 N to about 1.0 N.

8. The oral composition according to any one of claims 1 to 7, wherein the filler material has a fill value of from about 3 $cm^3/g$ to about 10 $cm^3/g$, such as from about 4.5 $cm^3/g$ to about 9 $cm^3/g$, or such as from about 3 $cm^3/g$ to about 7 $cm^3/g$, or such as from about 3.5 $cm^3/g$ to about 6 $cm^3/g$, or such as from about 4 $cm^3/g$ to about 6 $cm^3/g$.

9. The oral composition according to any one of claims 1 to 8, wherein the filler material comprises from about 1 wt% to about 60 wt% binder, such as from about 5 wt% to about 50 wt%, such as from about 6 wt% to about 40 wt%, such as from about 7 wt% to about 30 wt%, such as from about 10 wt% to about 25 wt%, such as from about 15 wt% to about 25 wt%.

10. The oral composition according to any one of claims 1 to 9, wherein the binder comprises crosslinked alginate, pectin and/or iota-carrageenan.

11. The oral composition according to any one of claims 1 to 10, wherein the filler material comprises a bulking agent selected from the list consisting of: wood pulp, hemp fibre, cellulose, cellulose derivatives, such as MCC, nanocellulose, and/or ground cellulose or any combination thereof.

12. The oral composition according to any one of claims 1 to 11, wherein the filler material has a water content of less than about 9 wt%, such as less than about 8 wt%.

13. A pouched product comprising the oral composition according to any one of claims 1 to 12.

14. A method of making the filler material of any of claims 1 to 12, the method comprising:

   (a) forming a mixture comprising

   - a crosslinkable binder;
   - an active and/or flavourant;
   - optionally a filler; and
   - a solvent;

   (b) ejecting the mixture through a nozzle such that the mixture moves with a velocity; and
   (c) contacting the ejected mixture with a solution comprising a cross-linking agent, where the velocity of the mixture is reduced on contact with the solution.

15. Use of a filler material in the form of one or more non-linear strands in an oral product, wherein the filler material comprises an active and a crosslinked binder.

Figure 1

Figure 2

Figure 3

Figure 4

## EUROPEAN SEARCH REPORT

Application Number

EP 24 17 1386

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/079212 A1 (CLARK CAROLINE W H [US] ET AL) 17 March 2022 (2022-03-17) <br> * paragraphs [0006], [0007], [0017], [0018] - [0020], [0023], [0024], [0027], [0030], [0042], [0066], [0089] * <br> * paragraphs [97.98], [0119], [0120], [0139], [0158], [0160] - [0164] * | 1-15 | INV.<br>A24B13/00<br>A23P30/20<br>A24B3/14 |
| X | US 2023/309603 A1 (ST CHARLES FRANK KELLEY [US]) 5 October 2023 (2023-10-05) <br> * paragraphs [0053], [0064], [0065], [0170] * | 1-11,13, 15 | |
| X | US 2008/305216 A1 (CRAWFORD DANIELLE R [US] ET AL) 11 December 2008 (2008-12-11) <br> * claims 4, 5, 8, 11, 12 * | 1-11,13, 15 | |
| A | US 9 687 023 B2 (MISHRA MUNMAYA K [US]; LIU SHENGSHENG [US] ET AL.) 27 June 2017 (2017-06-27) <br> * the whole document * | 1-15 | |

TECHNICAL FIELDS SEARCHED (IPC)

A24B
A23P
A24F

The present search report has been drawn up for all claims

| Place of search | Date of completion of the search | Examiner |
|---|---|---|
| Munich | 16 September 2024 | Czerny, M |

## ANNEX TO THE EUROPEAN SEARCH REPORT
## ON EUROPEAN PATENT APPLICATION NO.

EP 24 17 1386

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2024

| Patent document cited in search report | Publication date | Patent family member(s) | | Publication date |
|---|---|---|---|---|
| US 2022079212 A1 | 17-03-2022 | EP | 4210512 A1 | 19-07-2023 |
| | | JP | 2023540812 A | 26-09-2023 |
| | | KR | 20230068413 A | 17-05-2023 |
| | | US | 2022079212 A1 | 17-03-2022 |
| | | WO | 2022053982 A1 | 17-03-2022 |
| US 2023309603 A1 | 05-10-2023 | US | 2023309603 A1 | 05-10-2023 |
| | | WO | 2023187675 A1 | 05-10-2023 |
| US 2008305216 A1 | 11-12-2008 | US | 2008305216 A1 | 11-12-2008 |
| | | US | 2015104552 A1 | 16-04-2015 |
| | | US | 2017143023 A1 | 25-05-2017 |
| | | US | 2018249746 A1 | 06-09-2018 |
| | | US | 2020383366 A1 | 10-12-2020 |
| | | US | 2024057648 A1 | 22-02-2024 |
| | | WO | 2009004488 A2 | 08-01-2009 |
| US 9687023 B2 | 27-06-2017 | BR | 112012008275 A2 | 15-03-2016 |
| | | CA | 2776819 A1 | 14-04-2011 |
| | | DK | 2485609 T3 | 10-04-2017 |
| | | EC | SP12011874 A | 31-07-2012 |
| | | EP | 2485609 A1 | 15-08-2012 |
| | | JP | 5940451 B2 | 29-06-2016 |
| | | JP | 2013507105 A | 04-03-2013 |
| | | KR | 20120100941 A | 12-09-2012 |
| | | MY | 166611 A | 17-07-2018 |
| | | PL | 2485609 T3 | 31-07-2017 |
| | | RU | 2012118385 A | 20-11-2013 |
| | | UA | 110330 C2 | 25-12-2015 |
| | | US | 2011083688 A1 | 14-04-2011 |
| | | WO | 2011042168 A1 | 14-04-2011 |

EPO FORM P0459

For more details about this annex : see Official Journal of the European Patent Office, No. 12/82